# EUROPEAN PATENT SPECIFICATION

(11) **EP 4 428 701 B1**
(45) Date of publication and mention of the grant of the patent: **31.12.2025**
(21) Application number: 24700058.1
(22) Date of filing: 18.01.2024
(51) Int. Cl.: G06F 11/07, G06F 13/42

(54) **ELECTRONIC DEVICE, AND METHOD FOR TRANSMITTING AND RECEIVING USB DATA IN ELECTRONIC DEVICE**
ELEKTRONISCHE VORRICHTUNG UND VERFAHREN ZUM SENDEN UND EMPFANGEN VON USB-DATEN IN DER ELEKTRONISCHEN VORRICHTUNG
DISPOSITIF ÉLECTRONIQUE, PROCÉDÉ DE TRANSMISSION ET DE RÉCEPTION DE DONNÉES USB DANS UN DISPOSITIF ÉLECTRONIQUE

(30) Priority: 18.01.2023 KR 20230007449
(43) Date of publication of application: 11.09.2024
(73) Proprietor: Samsung Electronics Co., Ltd., Suwon-si, Gyeonggi-do 16677 (KR)
(72) Inventor: CHO, Hakbong, Suwon-si, Gyeonggi-do 16677 (KR); KIM, Yeongseon, Suwon-si, Gyeonggi-do 16677 (KR); YOON, Jungsik, Suwon-si, Gyeonggi-do 16677 (KR); JEON, Hwansoo, Suwon-si, Gyeonggi-do 16677 (KR); CHOI, Hangrak, Suwon-si, Gyeonggi-do 16677 (KR); HAN, Yonggil, Suwon-si, Gyeonggi-do 16677 (KR)
(74) Representative: HGF
(86) International application number: PCT/KR2024/000889
(87) International publication number: WO 2024/155118

(56) References cited:
- JP-A- 2003 150 536
- JP-A- 2005 129 008
- JP-A- 2008 108 083
- JP-A- 2011 003 162
- JP-A- 2013 081 131
- US-A1- 2017 181 176
- US-A1- 2019 090 187

## Description

### [Technical Field]

Various embodiments of the disclosure relates to an electronic device and an operating method thereof and, more particularly, to a method in which an electronic device transmits and receives USB data.

### [Background Art]

With the development of electronic information and communication technology, various functions are integrated into communication devices or electronic devices, and such electronic devices may include a function of transmitting and receiving data to and from other electronic devices. For example, a portable electronic device (e.g., a mobile terminal, a tablet terminal, or a wearable electronic device) may include a data transmission and reception function based on a universal serial bus (USB) standard.

The USB standard is one of data transfer methods, and may support data transmission and reception between electronic devices having a USB interface. One of data transfer methods used in the USB standard is a bulk transfer method.

US 2017/181176 A1 is disclosing an USB device adapting his own transmission delay according to error rate.

### [Detailed Description of the Invention]

### [Technical Solution]

An operating system (OS) (e.g., an Android system) of an electronic device may provide a USB interface through an application interface (API) (e.g., a host API or an accessory API). The electronic device (e.g., a transmitting electronic device) may transmit data (e.g., application data) associated with an application to an external electronic device (e.g., a receiving electronic device) connected through the USB interface by a bulk method.

When a plurality of data packets is transmitted from the electronic device to the external electronic device, an error, such as packet breakage or packet loss may occur. The external electronic device may perform an error (e.g., integrity) check to detect packet breakage or packet loss of each of the plurality of received data packets, by using an application instead of through a subsystem, such as a kernel. Checking the integrity of each of the plurality of data packets by using the application may take considerable processing time, increase central processing unit (CPU) resource utilization, and may cause a decrease in transmission speed. Further, when integrity is broken when the plurality of data packets is transmitted from the electronic device to the external electronic device, there may be a high possibility that the frequency of errors occurring in data packets gradually increases, which may cause frequent retransmissions and may degrade overall transmission performance.

When data having a size of a multiple of a maximum packet size determined by a USB bus speed is transmitted last, a USB transmission protocol enables data of a zero-length packet (ZLP) (e.g., 0 bytes) to be further transmitted. However, an operation of identifying and processing each data size may complicate application implementation logic.

According to the invention as defined in claims 1 and 9, there are provided an electronic device and a method for an electronic device to transmit and receive USB data which are capable of reducing occurrence of an error, such as packet breakage and packet loss of a transmitted data packet, by inducing delayed transmission of transmitted data packets, based on an error frequency of data packets when receiving a plurality of data packets. According to the invention as defined in claims 8 and 15, there are provided an electronic device and a method for an electronic device to transmit and receive USB data which are capable of inducing retransmission of data packets from a data packet having an error when detecting an error occurring in the data packet when receiving a plurality of data packets. The error frequency of data packets means the number of data packets in which an error has occurred among received data packets. In the present disclosure, an error rate can be used instead of the error frequency, where the error rate of data packets means the ratio of data packets in which an error has occurred among received data packets.

According to an example of the disclosure, there may be provided an electronic device and a method for an electronic device to transmit and receive USB data which enable a transmitter to identify whether a last data packet is successfully transferred by transmitting information about the last data packet to the transmitter in a specified time after receiving the last data packet when receiving a plurality of data packets.

According to an example of the disclosure, there may be provided an electronic device and a method for an electronic device to transmit and receive USB data which enable a receiving electronic device not to need to identify a maximum packet size of each packet data by additionally transmitting data when the data size of each data packet is a multiple of a maximum USB packet size when receiving a plurality of data packets.

According to the invention as defined in claim 1, the electronic device includes a USB connector, a USB interface, and a processor. The processor receives a first plurality of data packets from an external electronic device via the USB connector and the USB interface. The processor identifies a first error frequency corresponding to the first plurality of data packets, and identifies a first transmission delay time based on the first error frequency.
The processor transmits the first transmission delay time to the external electronic device via the USB connector and the USB interface. The processor is configured to receive, based on transmission of the first transmission delay time, a second plurality of data packets transmitted after the first plurality of data packets from the external electronic device via the USB connector and the USB interface, wherein transmission of each data packet of the second plurality of data packets is separated by the first transmission delay time.

An electronic device according the invention as defined in claim 9 includes a USB connector, a USB interface, and a processor. The processor transmits a first plurality of data packets to an external electronic device via the USB connector and the USB interface. The processor receives a first transmission delay time based on a first error frequency corresponding to the first plurality of data packets from the external electronic device via the USB connector and the USB interface. The processor is configured to transmit, based on reception of the first transmission delay time, a second plurality of data packets after the first plurality of data packets to the external electronic device via the USB connector and the USB interface by separating the transmission of each of the second plurality of data packets by the first transmission delay time.

A method in which an electronic device transmits packet data via a USB connection to an external electronic device according to the invention as defined in claim 8 includes transmitting a first plurality of data packets to an external electronic device. The method includes receiving a first transmission delay time based on a first error frequency corresponding to the first plurality of data packets from the external electronic device. The method includes transmitting a second plurality of data packets after the first plurality of data packets to the external electronic device by separating the transmission of each of the second plurality of data packets by the first transmission delay time.

A method in which an electronic device receives packet data via a USB connection from an external electronic device according to the invention as defined in claim 15 includes receiving a first plurality of data packets from an external electronic device. The method includes identifying a first error frequency corresponding to the first plurality of data packets. The method includes identifying a first transmission delay time based on the first error frequency and transmitting the first transmission delay time to the external electronic device. The method includes receiving, based on transmission of the first transmission delay time, a second plurality of data packets transmitted after the first plurality of data packets from the external electronic device, wherein transmission of each data packet of the second plurality of data packets is separated by the first transmission delay time.

According to an embodiment, a non-transitory recording medium may store commands, the commands may be configured to cause an electronic device to perform at least one operation when executed by the electronic device, and the at least one operation may include receiving a first plurality of data packets from an external electronic device, identifying a first error frequency corresponding to the first plurality of data packets, identifying a first transmission delay time based on the first error frequency and receiving, based on transmission of the first transmission delay time, a second plurality of data packets transmitted after the first plurality of data packets from the external electronic device, wherein transmission of each data packet of the second plurality of data packets is separated by the first transmission delay time.

According to an embodiment, a non-transitory recording medium may store commands, the commands may be configured to cause an electronic device to perform at least one operation when executed by the electronic device, and the at least one operation may include transmitting a first plurality of data packets to an external electronic device, transmitting a second plurality of data packets after the first plurality of data packets to the external electronic device by separating the transmission of each of the second plurality of data packets by the first transmission delay time.

### [Brief Description of Drawings]

FIG. 1 is a block diagram of an electronic device in a network environment according to an embodiment;
FIG. 2 is a block diagram of electronic devices according to an embodiment;
FIG. 3 is a flowchart illustrating a USB data transmission operation of a first electronic device according to an embodiment;
FIG. 4 is a flowchart illustrating a USB data reception operation of a second electronic device according to an embodiment;
FIG. 5 illustrates a USB data packet according to an embodiment;
FIG. 6A illustrates a case in which a first transmission delay time based on a first data packet error frequency corresponding to a first plurality of packets is applied when a plurality of data packets is transmitted and received between a first electronic device and a second electronic device according to an embodiment;
FIG. 6B illustrates a case in which a second transmission delay time based on a second data packet error frequency corresponding to a second plurality of packets is applied when a plurality of data packets is transmitted and received between a first electronic device and a second electronic device according to an embodiment;
FIG. 6C illustrates a case in which a third transmission delay time based on a third data packet error frequency corresponding to a third plurality of packets is applied when a plurality of data packets is transmitted and received between a first electronic device and a second electronic device according to an embodiment;
FIG. 7 illustrates an operation based on breakage of a data packet transmitted when a plurality of data packets of a USB bulk type is transmitted from a first electronic device to a second electronic device according to an embodiment;
FIG. 8 illustrates an operation based on loss of a data packet transmitted when a plurality of data packets of a USB bulk type is transmitted from a first electronic device to a second electronic device according to an embodiment;
FIG. 9 illustrates an operation based on loss of a last data packet transmitted when a plurality of data packets of a USB bulk type is transmitted from a first electronic device to a second electronic device according to an embodiment; and
FIG. 10 illustrates an operation of adding and transmitting padding data, based on identification of the data size of a data packet to be transmitted by a first electronic device according to an embodiment.

In describing the drawings, the same or like reference numerals may be used to refer to the same or like elements.

### [Mode for Carrying out the Invention]

Terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meanings as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the terms defined in the disclosure should not be interpreted to exclude embodiments of the disclosure.

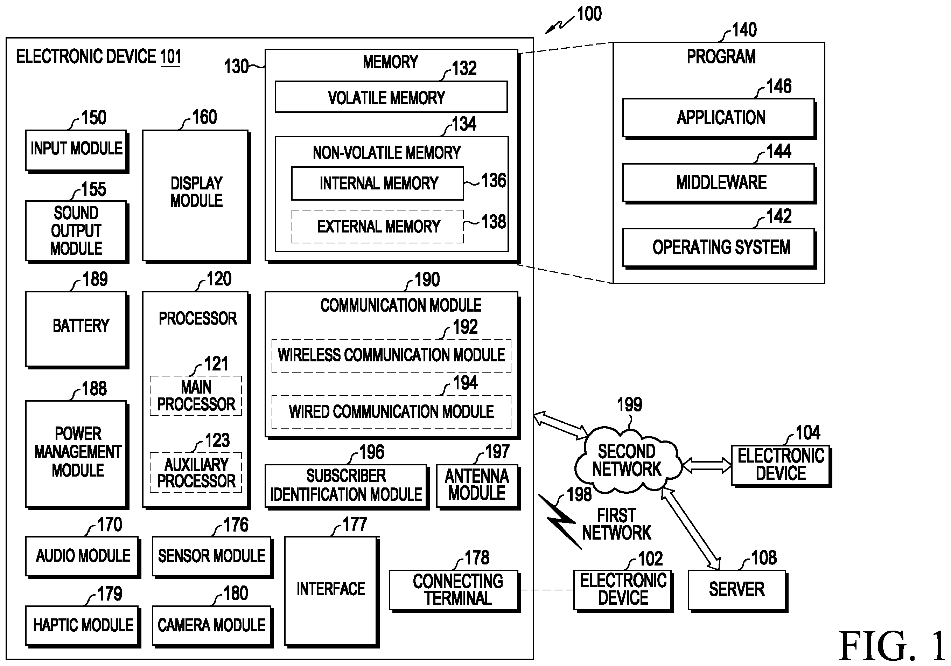

FIG. 1 is a block diagram illustrating an electronic device 101 in a network environment 100 according to embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

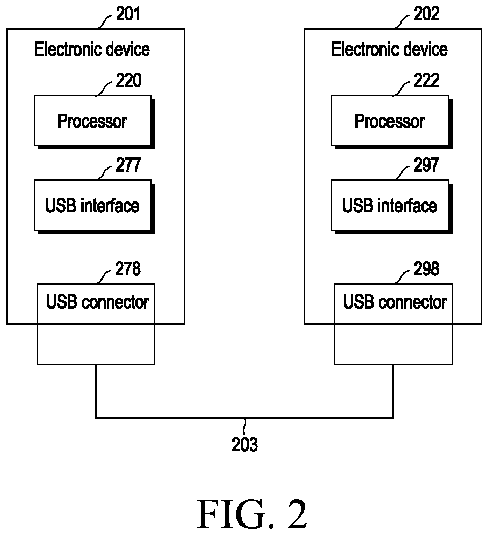

FIG. 2 is a block diagram of electronic devices according to an example of the present disclosure.

Referring to FIG. 2, an electronic device 201 (e.g., the electronic device 101 of FIG. 1) (hereinafter also referred to as a "first electronic device") may be connected to an electronic device 202 (e.g., an external electronic device of the electronic device 101)) (hereinafter also referred to as a "second electronic device") through a USB cable 203 or via wireless USB. The first electronic device 201 may transmit a USB protocol-based data packet to the second electronic device 202 in a state of being connected to the second electronic device 202, and the second electronic device 202 may receive the USB protocol-based data packet from the first electronic device 201. Although the following description will be made with reference to an illustrative case in which the first electronic device 201 operates as a transmitting electronic device and the second electronic device 202 operates as a receiving electronic device, it may be obvious to those skilled in the art that each of the first electronic device 201 and the second electronic device 202 may have functions of both a receiving electronic device and a transmitting electronic device and may operate as a receiving electronic device or a transmitting electronic device.

The first electronic device 201 includes a processor 220, a USB interface 277, and a USB connector 278. The first electronic device 201 may include various further components or omit some of the foregoing components. The first electronic device 201 may further include all or part of the electronic device 101 illustrated in FIG. 1.

The processor 220 (e.g., the processor 120 of FIG. 1) may include an application processor (AP) and/or a central processing unit (CPU). The processor 220 according transmits a plurality of data packets to the second electronic device 202 connected through the USB connector 278 by using the USB interface 277 (i.e. via the USB connect and the USB interface). The processor 220 may consecutively and sequentially transmit the plurality of data packets to the second electronic device 202, based on a USB bulk transfer method. The processor 220 receives a transmission delay time (e.g., a first transmission delay time or a first timeout value) (or a flow control request signal including the transmission delay time) based on an error count (e.g., a first error frequency, first error rate etc.) corresponding to a first plurality of data packets transmitted among the plurality of transmitted data packets, from the second electronic device 202. The processor 220 transmits a second plurality of data packets after the first plurality of data packets by delaying each of the second plurality of data packets by the first transmission delay time, based on reception of the first transmission delay time based on the first error frequency corresponding to the first plurality of data packets among the plurality of transmitted data packets. In other words, after receiving the transmission delay time (e.g. first transmission delay time), the processor will transmit the second plurality of data packets by separating the transmission of each of data packet of the second plurality by the first transmission delay time. The processor 220 may receive a transmission delay time (e.g., a second transmission delay time or a second timeout value) based on an error count (e.g., a second error frequency, second error rate etc.) corresponding to the second plurality of transmitted data packets, from the second electronic device 202. The processor 220 may transmit a third plurality of data packets after the second plurality of data packets by delaying the third plurality of data packets by the second transmission delay time, based on reception of the second transmission delay time. In other words, after receiving the transmission delay time (e.g. second transmission delay time), the processor will transmit the third plurality of data packets by separating the transmission of each of data packet of the third plurality by the second transmission delay time. When the second error frequency corresponding to the second plurality of data packets is greater than the first error frequency corresponding to the first plurality of data packets, the processor 220 may receive the second transmission delay time, which is longer than the first transmission delay time. When the second error frequency corresponding to the second plurality of data packets is smaller than the first error frequency corresponding to the first plurality of data packets, the processor 220 may receive the second transmission delay time, which is shorter than the first transmission delay time. When the second error frequency corresponding to the second plurality of data packets is less than (or less than or equal to) a specified error frequency (allowable error frequency), the processor 220 may receive a delay stop (or a flow control request signal including a transmission delay time of 0) from the second electronic device 202. When receiving the delay stop (or the flow control request signal including the transmission delay time of 0), the processor 220 may transmit data packets without a delay between each of the packets of the next plurality of data packets. When there are additional data packets to be transmitted after transmitting the third plurality of data packets, a longer or shorter delay time or a delay stop may also be applied to the subsequent data packets according to an error frequency corresponding to previously transmitted data packets.

The processor 220 may store information about data packets transmitted within a specified time period (e.g., 10 seconds) or a specified number (e.g., 50) of data packets recently transmitted (in a queue) while transmitting the plurality of data packets to the second electronic device 202, based on the USB bulk transfer method. The processor 220 may receive information about an error data packet due to packet breakage or packet loss from the second electronic device 202 while transmitting the plurality of data packets to the second electronic device 202, based on the USB bulk transfer method. The information about the error data packet may include a sequence number and a negative acknowledgement (NAK) of the error data packet. When receiving the information about the error data packet from the second electronic device 202 while transmitting the plurality of data packets, the processor 220 may sequentially retransmit data packets from the data packet of the received sequence number to a data packet transmitted last, based on the stored information about the data packets transmitted within the specified time period or the specified number of data packets recently transmitted. When retransmission of the data packets is completed, the processor 220 may continue to transmit the plurality of data packets based on the USB bulk transfer method.

After transmitting the plurality of data packets to the second electronic device 202, based on the USB bulk transfer method, the processor 220 may receive information about a last data packet from the second electronic device 202. The information about the last data packet may include a sequence number and an acknowledgment (ACK) of the data packet received last by the second electronic device 202. The information about the last data packet may be transmitted from the second electronic device 202 in a specified time after the second electronic device 202 receives the last data packet or if the second electronic device 202 has determined that the transmission has ended. The specified time may be determined to be a value obtained by multiplying an average of time intervals of a specified number of data packets recently received by the second electronic device 202 by a predetermined multiple (e.g., an average (e.g., 10 ms) of time intervals of 100 data packets recently received * time constant (500) = 5 sec). When the sequence number of the information about the last data packet is different from a sequence number of the last data packet transmitted by the first electronic device 201, the processor 220 may retransmit data packets from the data packet of the sequence number of the information about the last data packet received from the second electronic device 202 to the actual last data packet.

When transmitting the plurality of data packets (e.g., a plurality of data packets corresponding to data specified to be transmitted by an application) to the second electronic device 202, based on the USB bulk transfer method, the processor 220 may identify a data size of the plurality of data packets to be transmitted (e.g., a total size of data specified to be transmitted by an application), and may identify whether the data size of the plurality of data packets to be transmitted is a multiple of a maximum USB packet size. When the data size is a multiple of the maximum USB packet size, the processor 220 may transmit the data packets after configuring a first value (e.g., 1) as a has Padding flag of a first data packet among the plurality of data packets and adding a predetermined padding byte of two bytes to the last data packet among the plurality of data packets. When the data size is not a multiple of the maximum USB packet size, the processor 220 according to an embodiment may transmit the data packets after configuring a second value (e.g., 0) as the Padding flag of the first data packet among the plurality of data packets and adding no padding byte to the last data packet. The has padding flag or indicator may be included in a header of the first packet. This approach to indicating a last data packet may be separately applied to each plurality of data packets (e.g. a has padding flag for each of the first, second, third plurality of packets) to be transmitted or to the total data packets to be transmitted (e.g. only a single has Padding flag across multiple pluralities of data packets that form the total data).

For example, when data specified to be transmitted by an application, based on the USB bulk transfer method, has a size of 1 M byte and the processor 220 transmits the data in a plurality of data packets each of which is 512 bytes, since the size (e.g., 1 M byte) of the data is a multiple of the maximum USB packet size (e.g., 512 bytes), the processor 220 may transmit the data packets after configuring a first value (e.g., 1) as a has Padding flag of a first data packet among the plurality of data packets and adding a predetermined padding byte of two bytes to a last data packet among the plurality of data packets. For example, when data specified to be transmitted by an application, based on the USB bulk transfer method, has a size of 1.1 M byte and the processor 220 transmits the data in a plurality of data packets each of which is 512 bytes, since the size (e.g., 1.1 M byte) of the data is not a multiple of the maximum USB packet size (e.g., 512 bytes), the processor 220 may transmit the data packets after configuring a second value (e.g., 0) as a has Padding flag of a first data packet among the plurality of data packets and adding no padding byte to a last data packet.

The USB interface 277 may support one or more USB protocols available while the first electronic device 201 is directly or wirelessly connected to the second electronic device 202.

The USB connector 278 may enable the first electronic device 201 to be physically connected to the second electronic device 202.

The second electronic device 202 includes a processor 222, a USB interface 297, and a USB connector 298. The second electronic device 202 may also include further components or omit some of the foregoing components. The second electronic device 202 may further include all or part of the electronic device 101 illustrated in FIG. 1.

The processor 222 (e.g., the processor 120 of FIG. 1) may include an application processor (AP) and/or a central processing unit (CPU). The processor 222 receives a plurality of data packets from the first electronic device 201 (e.g., an external electronic device of the second electronic device 202) connected through the USB connector 298 by using the USB interface 297. The processor 222 may consecutively and sequentially receive the plurality of data packets from the first electronic device 201, based on the USB bulk transfer method. The processor 220 (as opposed to the application with which the data is associated) may identify whether an error occurs in each of a first plurality of data packets received within a specified time, within a specified data size, or within specified number of data packets while receiving the plurality of data packets from the first electronic device 201. The number of packets in the plurality of data packets (e.g. first, second, third etc.) may be predetermined or variable. The processor 222 may identify whether an error occurs in each of the first plurality of data packets (e.g., check integrity) through a check sum or by checking a start/end flag with respect to each of the first plurality of data packets. However, any suitable form of error detection may be used by processor. The processor 222 transmits a transmission delay time (e.g., a first transmission delay time, a first packet separation time, a first packet delay time, a first transmission delay period, a first transmission delay interval or any combination of these terms) (or a flow control request signal including the transmission delay time or equivalent) based on an error count (e.g., a first error frequency/rate) corresponding to the first plurality of received data packets to the first electronic device 201. The processor 222 receives, from the first electronic device 201 and based on the transmitted first transmission delay time, data packets that have each been delayed with respect to their preceding data packet in the plurality of data packets by the first transmission delay time and transmitted after the first plurality of data packets, where the first transmission delay is based on the first error frequency corresponding to the first plurality of data packets. The processor 222 may identify whether an error occurs in each of the second plurality of data packets received within a specific time after the first plurality of data packets, within a specific data size, or within a specified number of data packets. The processor 222 may identify whether an error occurs in each of the second plurality of data packets (e.g., check integrity) through a check sum or by checking a start/end flag with respect to each of the second plurality of data packets. The processor 222 transmits a transmission delay time (e.g., a second transmission delay time, a second packet separation time, a second packet delay time, a second transmission delay period, a second transmission delay interval or any combination of these terms.) (or a flow control request signal including the second transmission delay time) based on an error count (e.g., a second error frequency) corresponding to the second plurality of received data packets to the first electronic device 201. The processor 222 may receive, from the first electronic device 201 and based on the transmitted second transmission delay time, third data packets that have each been delayed with respect to their preceding data packet in the plurality of data packets by the second transmission delay time and transmitted after the second plurality of data packets, where the second transmission delay is based on the second error frequency corresponding to the second plurality of data packets. When the second error frequency corresponding to the second plurality of data packets is greater than the first error frequency corresponding to the first plurality of data packets, the processor 222 may transmit the second transmission delay time, which is longer than the first transmission delay time, to the first electronic device 201. When the second error frequency corresponding to the second plurality of data packets is smaller than the first error frequency corresponding to the first plurality of data packets, the processor 222 may transmit the second transmission delay time, which is shorter than the first transmission delay time, to the first electronic device 201. When the second error frequency corresponding to the second plurality of data packets is less than (or less than or equal to) a specified error count (allowable error frequency), the processor 222 may transmit a delay stop (or a flow control request signal including a transmission delay time of 0) to the first electronic device 201. When there are additional data packets to be received after receiving the third plurality of data packets, a longer or shorter delay time or a delay stop may also be applied to the subsequently received data packets according to an error frequency corresponding to previously received data packets. In some examples, the value of the transmission delay times may be dependent the specific error frequency such that a higher error frequency will result in a longer transmission delay time and vice versa. Additionally or alternatively, the relationship between the transmission delay times and error frequency may be variable, such that when a required transmission reliability is high the transmission delay time may be longer compared to a situation where a lower transmission reliability is required, even if the error frequencies are the same. There may also be upper and/or lower bounds on the values of the transmission delay times, the values of the transmission delay times may be dependent on the size of the data packets, and/or the values of the transmission delay times may be dependent on the data rate with which each packet transmitted.

The processor 222 may identify packet breakage or packet loss with respect to each of the plurality of data packets while receiving the plurality of data packets from the first electronic device 201, based on the USB bulk transfer method. When an error data packet due to packet breakage or packet loss is identified, the processor 222 may transmit information about the error data packet due to the packet breakage or packet loss to the first electronic device 201. The information about the error data packet according to an embodiment may include a sequence number and a negative acknowledgement (NAK) of the error data packet. After transmitting the information about the error data packet, the processor 222 may sequentially re-receive data packets from the data packet of the sequence number to a data packet transmitted last from the first electronic device 201. When re-reception of the data packets is completed, the processor 222 may continue to receive the plurality of data packets based on the USB bulk transfer method.

When receiving no data packet for a specified time after receiving the plurality of data packets from the first electronic device 201, based on the USB bulk transfer method, the processor 222 may transmit information about a last data packet to the first electronic device 201. The information about the last data packet according to an embodiment include a sequence number and an acknowledgment (ACK) of the data packet received last by the second electronic device 202. The information about the last data packet may be transmitted in a specified time after the second electronic device 202 receives the last data packet from the first electronic device 201 or if the second electronic device 202 has otherwise determined that the transmission has ended. The specified time may be determined to be a value obtained by multiplying an average of time intervals of a specified number of data packets recently received by the second electronic device 202 by a predetermined multiple (e.g., an average (e.g., 10 ms) of time intervals of 100 data packets recently received * time constant (500) = 5 sec). When the sequence number of the information about the last data packet is different from a sequence number of the last data packet transmitted by the first electronic device 201, the processor 222 may re-receive data packets from the data packet of the sequence number of the information about the last data packet to the actual last data packet from the first electronic device 201.

When receiving the plurality of data packets, based on the USB bulk transfer method, the processor 222 may identify a has Padding flag value or indicator of a header of each received data packet and whether a padding byte exists. After identifying that a has Padding flag value of a header of a first data packet among the plurality of data packets is configured to have a first value, when a padding byte exists in a subsequently received data packet, the processor 222 according to an embodiment may identify the data packet in which the padding byte exists as the last data packet. When identifying that the has Padding flag value of the header of the data packet received first among the plurality of data packets is configured to have a second value (e.g., 0), the processor 222 may identify that no padding byte exists.

The USB interface 297 may support a USB protocol available while the second electronic device 202 is directly or wirelessly connected to the first electronic device 201.

The USB connector 298 may include a connector that enables the second electronic device 202 to be physically connected to the first electronic device 201.

The electronic device (101 of FIG. 1 or 202 of FIG. 2) according to the invention includes a USB connector (298 of FIG. 2), a USB interface (297 of FIG. 2), and a processor (120 of FIG. 1 or 222 of FIG. 2). The processor receives a first plurality of data packets from an external electronic device. The processor (as opposed to the application with which the data is associated) identifies a first error frequency or rate corresponding to the first plurality of data packets, and identifies a first transmission delay time based on the first error frequency. The processor transmits the first transmission delay time to the external electronic device. The processor is configured to receive a second plurality of data packets transmitted after the first plurality of data packets from the external electronic device, where transmission of each of the data packets of the second plurality of data packets are separated from each other (i.e. delay with respect to the preceding data packet of the plurality of data packets) by the first transmission delay time.

The first plurality of data packets may be data packets received from the external electronic device within a specified time, within a specified data size, or within a specified number of data packets. The number of packets in the plurality of data packets (e.g. first, second, third etc.) may be predetermined or variable.

The processor may be configured to identify whether or not an error occurs in each of the first plurality of data packets by performing a checksum on the each of the first plurality of data packets or checking start and end flags of the each of the plurality of first data packets. The processor may also identify whether or not an error occurs in each of the first plurality of data packets by performing any other suitable form of error detection.

The processor may identify a second error frequency corresponding to the second plurality of data packets. The processor may identify a second transmission delay time based on the second error frequency. The processor may transmit the second transmission delay time to the external electronic device. The processor may be configured to receive a third plurality of data packets transmitted from the external electronic device, where transmission of each of the data packets of the third plurality of data packets are separated from each other by the second transmission delay time.

The processor may be configured to specify the second transmission delay time to be longer than the first transmission delay time when the first error frequency is greater than the second error frequency, and specify the second transmission delay time to be shorter than the first transmission delay time when the first error frequency is smaller than the second error frequency.

The processor may identify an error data packet due to packet breakage or packet loss among a plurality of data packets received from the external electronic device. The processor may transmit information about the error data packet to the external electronic device. The processor may be configured to sequentially re-receive, from the external electronic device, data packets from the error data packet to a last data packet received from the external electronic device.

The processor may identify information about the last data packet received from the external electronic device, and may transmit a first sequence number of the information about the last data packet to the external electronic device. The processor may be configured to re-receive data packets from a data packet of the first sequence number to a data packet of a second sequence number when the first sequence number of the last data packet transmitted to the external electronic device is different from the second sequence number of the last data packet transmitted from the external electronic device.

The processor according may be configured to identify whether or not a data packet is a last data packet among the plurality of data packets, based on whether or not the data packet received from the external electronic device includes padding data.

The processor may be configured to identify that the data packet including padding data is the last data packet when the data packet including padding data is received after a first data packet which has a flag of a header with a specified value is received from the external electronic device.

The electronic device (101 of FIG. 1 or 201 of FIG. 2) according to the invention includes a USB connector (278 of FIG. 2), a USB interface (277 of FIG. 2), and a processor (120 of FIG. 1 or 220 of FIG. 2). The processor transmits a first plurality of data packets to an external electronic device. The processor receives a first transmission delay time based on a first error frequency corresponding to the first plurality of data packets from the external electronic device. The processor is configured to transmit a second plurality of data packets after the first plurality of data packets by delaying each data packet relative to the preceding data packet of the second plurality of data packets by the first transmission delay time, based on reception of the first transmission delay time.

The first plurality of data packets may be data packets received by the external electronic device within a specified time, within a specified data size, or within a specific number of data packets.

The processor may be configured to receive a second transmission delay time based on a second error frequency corresponding to the second plurality of data packets from the external electronic device, and transmit a third plurality of data packets after the second plurality of data packets to the external electronic device by delaying each data packet relative to the preceding data packet of the third plurality of data packets by the second transmission delay time, based on reception of the second transmission delay time.

The second transmission delay time may be specified to be longer than the first transmission delay time when the first error frequency is greater than the second error frequency, and the second transmission delay time may be specified to be shorter than the first transmission delay time when the first error frequency is smaller than the second error frequency.

The processor may be configured to receive information about an error data packet due to packet breakage or packet loss from the external electronic device while transmitting a plurality of data packets to the external electronic device, and sequentially retransmit, to the external electronic device, data packets from the error data packet to a last data packet received transmitted from the external electronic device, based on reception of the information about the error data packet.

The processor may be configured to receive information about the last data packet received by the external electronic device from the external electronic device, and retransmit data packets from a data packet of a first sequence number to a data packet of a second sequence number when the first sequence number of the last data packet received by the external electronic device is different from the second sequence number of the last data packet transmitted to the external electronic device, based on the received information.

The processor may be configured to identify a data size of the plurality of data packets to be transmitted to the external electronic device, identify whether or not the data size of the plurality of data packets is a multiple of a maximum USB packet size, transmit the plurality of data packets by configuring a first value as a value of a header of a first data packet among the plurality of data packets and adding padding data to a last data packet among the plurality of data packets when the data size of the plurality of data packets is a multiple of the maximum USB packet size, and transmit the plurality of data packets after configuring a second value as the value of the header of the first data packet among the plurality of data packets and adding no padding data to the last data packet among the plurality of data packets when the data size of the plurality of data packets is not a multiple of the maximum USB packet size. By virtue of introducing the above-mentioned transmission delay times, the transmission/reception of the data packets is spread out/staggered and therefore reliability of the data packet transmissions can be increased (i.e. error rates reduced). Furthermore, it is the processor of the electronic devices that performs the error detection, retransmission requests, transmission delay time selection as opposed to an application with which the data is associated, which provides a more efficient approach to control of bulk data USB transmissions. In other words, the control of the bulk data USB transmission is performed at the kernel/transport level instead of the application level.

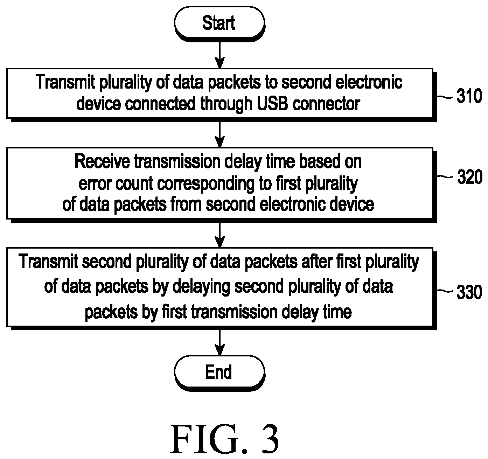

FIG. 3 is a flowchart illustrating a USB data transmission operation of a first electronic device according to the invention.

Referring to FIG. 3, a processor (e.g., the processor 120 of FIG. 1 or the processor 220 of FIG. 2) of the first electronic device (e.g., the electronic device 101 of FIG. 1 or the electronic device 201 of FIG. 2) perform the operations 310 to 330.

In operation 310, the processor 220 transmits a plurality of data packets to a second electronic device (e.g., the electronic device 202 of FIG. 2) connected through a USB connector 278 by using a USB interface 277. The processor 220 may consecutively and sequentially transmit the plurality of data packets to the external electronic device 202, based on a USB bulk transfer method.

In operation 320, the processor 220 receives a transmission delay time (e.g., a first transmission delay time) (or a flow control request signal including the transmission delay time) based on an error count (e.g., a first error frequency) corresponding to a first plurality of data packets previously transmitted among the plurality of transmitted data packets, from the second electronic device 202.

In operation 330, the processor 220 transmits a second plurality of data packets after the first plurality of data packets by delaying each data packet of the second plurality of data packets by the first transmission delay time, based on the received first transmission delay time, which is based on the first error frequency corresponding to the first plurality of data packets. In particular, in operation 330, the processor 220 introduces the first transmission delay time in between the transmission of each of the data packets of the second plurality of data packets such that the transmission of each data packet of the second plurality of data packets is delayed with respect to the transmission of the preceding data packet of the second plurality of data packets by the first transmission delay time. The processor 220 may further receive a transmission delay time (e.g., a second transmission delay time) based on an error count (e.g., a second error frequency) corresponding to the second plurality of transmitted data packets. The processor 220 may further transmit a third plurality of data packets after the second plurality of data packets by delaying each data packet of the third plurality of data packets by the second transmission delay, based on the received second transmission delay time. When the second error frequency corresponding to the second plurality of data packets is greater than the first error frequency corresponding to the first plurality of data packets, the processor 220 may receive a second transmission delay time that is longer than the first transmission delay time. When the second error frequency corresponding to the second plurality of data packets is smaller than the first error frequency corresponding to the first plurality of data packets, the processor 220 may receive a second transmission delay time that is shorter than the first transmission delay time. When the second error frequency corresponding to the second plurality of data packets is less than (or less than or equal to) a specified error count (allowable error frequency), the processor 220 may receive a delay stop (or a flow control request signal including a transmission delay time of 0). When receiving the delay stop (or the flow control request signal including the transmission delay time of 0), the processor 220 may transmit data packets without a delay i.e. transmit the data packets as normal. When there are additional data packets to be transmitted after transmitting the third plurality of data packets, a longer or shorter delay time or a delay stop may also be applied to the subsequent data packets according to an error count corresponding to previously transmitted data packets.

A packet data transmission method of an electronic device (101 of FIG. 1 or 201 of FIG. 2) includes an operation of transmitting a first plurality of data packets to an external electronic device. The method includes an operation of receiving a first transmission delay time based on a first error frequency corresponding to the first plurality of data packets from the external electronic device. The method includes an operation of transmitting a second plurality of data packets after the first plurality of data packets to the external electronic device by delaying each of the second plurality of data packets with respect to its preceding data packet by the first transmission delay time, based on the received first transmission delay time.

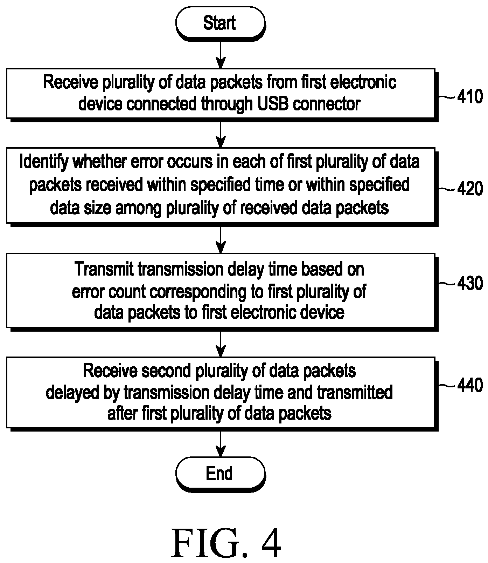

FIG. 4 is a flowchart illustrating a USB data reception operation of a second electronic device according to the invention.

Referring to FIG. 4, a processor (e.g., the processor 120 of FIG. 1 or the processor 222 of FIG. 2) of the second electronic device (e.g., the electronic device 101 of FIG. 1 or the electronic device 202 of FIG. 2) perform the operations 410 to 440.

In operation 410, the processor 222 receives a plurality of data packets from a first electronic device 201 (e.g., an external electronic device of the second electronic device 202) connected through a USB connector 278 by using a USB interface 277.

In operation 420, the processor 222 may identify whether an error occurs in each of a first plurality of data packets received within a specified time, within a specified data size, or within a specific number of data packets. The processor 222 may identify whether an error occurs in each of the first plurality of data packets (e.g., check integrity) through a check sum, by checking a start/end flag with respect to each of the first plurality of data packets, or by any other suitable error detection technique.

In operation 430, the processor 222 transmits a transmission delay time (e.g., a first transmission delay time) (or a flow control request signal including the transmission delay time) based on an error count (e.g., a first error frequency/rate) corresponding to the first plurality of received data packets to the first electronic device 201.

In operation 440, the processor 222 receives, from the first electronic device 201, a second plurality of data packets, each of the second plurality of data packets delayed by (i.e. separated by) the first transmission delay time with respect to the preceding data packet of the second plurality of data packets, and transmitted after the first plurality of data packets. The reception of the second plurality of data packets is based on the transmission of the first transmission delay, which has been determined based on the first error frequency corresponding to the first plurality of data packets. The processor 222 may identify whether an error occurs in each of the second plurality of data packets received within a specific time after the first plurality of data packets, within a specific data size, , or within a specific number of data packets. The processor 222 may further identify whether an error occurs in each of the second plurality of data packets (e.g., check integrity) through a check sum, by checking a start/end flag with respect to each of the second plurality of data packets, or using any other suitable error detection technique. The processor 222 may transmit a transmission delay time (e.g., a second transmission delay time) (or a flow control request signal including the second transmission delay time) based on an error count (e.g., a second error frequency) corresponding to the second plurality of received data packets to the first electronic device 201. The processor 222 may receive, from the first electronic device 201, third plurality data packets delayed by (separated by) the second transmission delay time with respect to the preceding data packet of the second plurality of data packets, and transmitted after the second plurality of data packets. The reception of the third plurality of data packets may be based on the transmission of the second transmission delay, which is based on the second error frequency corresponding to the second plurality of data packets. When the second error frequency corresponding to the second plurality of data packets is greater than the first error frequency corresponding to the first plurality of data packets, the processor 222 may transmit a second transmission delay time that is longer than the first transmission delay time, to the first electronic device 201. When the second error frequency corresponding to the second plurality of data packets is smaller than the first error frequency corresponding to the first plurality of data packets, the processor 222 may transmit a second transmission delay time that is shorter than the first transmission delay time, to the first electronic device 201. When the second error frequency corresponding to the second plurality of data packets is less than (or less than or equal to) a specified error count (allowable error frequency), the processor 222 may transmit a delay stop (or a flow control request signal including a transmission delay time of 0) to the first electronic device 201. When there are additional data packets to be received after receiving the third plurality of data packets, a longer or shorter delay time or a delay stop may also be applied to the subsequently received data packets according to an error count corresponding to previously received data packets.

The packet data reception method of the electronic device according to the invention (101 of FIG. 1 or 201 of FIG. 2) includes an operation of receiving a first plurality of data packets from an external electronic device. The method includes an operation of identifying a first error frequency corresponding to the first plurality of data packets. The method includes an operation of identifying a first transmission delay time based on the first error frequency and transmitting the first transmission delay time to the external electronic device. The method includes an operation of receiving a second plurality of data packets transmitted after the first plurality of data packets from the external electronic device, where the transmission of each of the data packets of the second plurality of data packets by the external electronic device is delayed with respect to its preceding data packet by the first transmission delay time, based on the transmitted first transmission delay time.

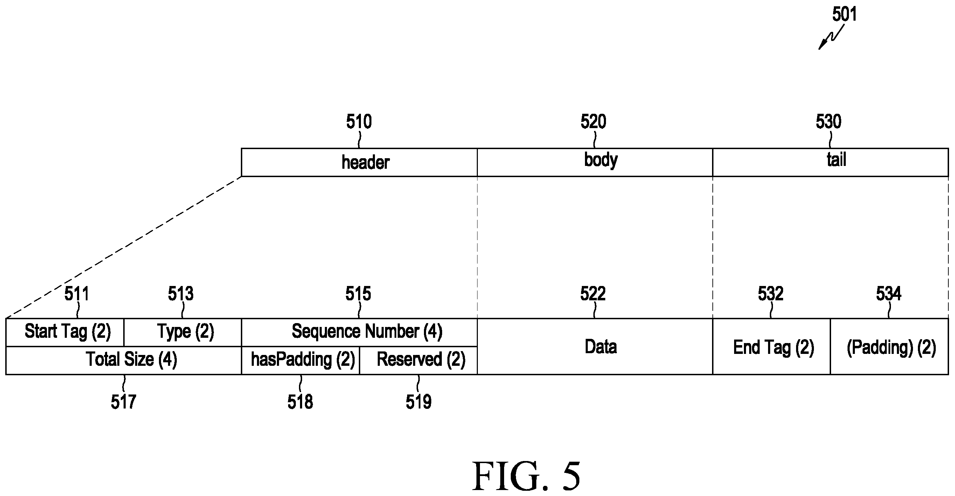

FIG. 5 illustrates a USB data packet according to an embodiment.

Referring to FIG. 5, a processor 220 of a first electronic device 201 may transmit a data packet 501 in a specified USB data packet format to a second electronic device 202. The data packet 501 may include a header area 510, a body area 520, and a tail area 530.

The header area 510 may have an eight-byte length, and may include a start tag 511, a type 513, a sequence number 515, a total size 517, and a hasPadding (or has Padding) 518 flag or equivalent indicator or flag, and a reserved number of bits 519. The start tag 511 may include tag information indicating a start (e.g., 0xFBFC). The type 513 may include packet type information (e.g., data, an ACK, or a NAK). For example, data is information indicating that a packet type is data, and may include information of a one-byte length. An ACK is information indicating that a packet type is an acknowledgment (e.g., a positive acknowledgment), and may include information of a two-byte length. A NAK is information indicating that a packet type is a negative acknowledgment, and may include information of a four-byte length. The sequence number 515 may include information indicating a sequence number of a data packet (e.g., one of 1 to MAX_INTEGER (0x7FFFFFFF)-1). The total size 517 may include information about the total size of the data packet including the header area 510, the body area 520, and the tail area 530. The has Padding 518 flag may include information about whether padding data (or byte) is included (e.g., has padding or no padding). The reserved 519 is a spare byte, and may not include information.

The body area 520 may include data 522 (e.g., data used in an application) to be actually transmitted. The length of the body area 520 may be determined by a bus speed of the second electronic device 202. For example, the length of the body area 520 may be 64 bytes when the bus speed of the second electronic device 202 is full speed, may be 512 bytes when the bus speed is high speed, or may be 1024 bytes when the bus speed of the second electronic device 202 is super speed. The length of the body area 520 may also be determined to be a different length to these.

The tail area 530 may have a four-byte length, and may include an end tag 532 or may include the end tag 532 and a padding 534. According to an example, when the size of the data 522 of the data packet 501 is not a multiple of a maximum USB packet size, the processor 220 may configure the has Padding 518 flag of the header to have a second value (e.g., 0), and may not add the padding 534 to the tail area 530. When the size of the data 522 of the data packet 501 is a multiple of the maximum USB packet size, the processor 220 may configure the has Padding 518 flag of the header to have a first value (e.g., 1), and may add the padding 534 of two bytes to the tail area 530.

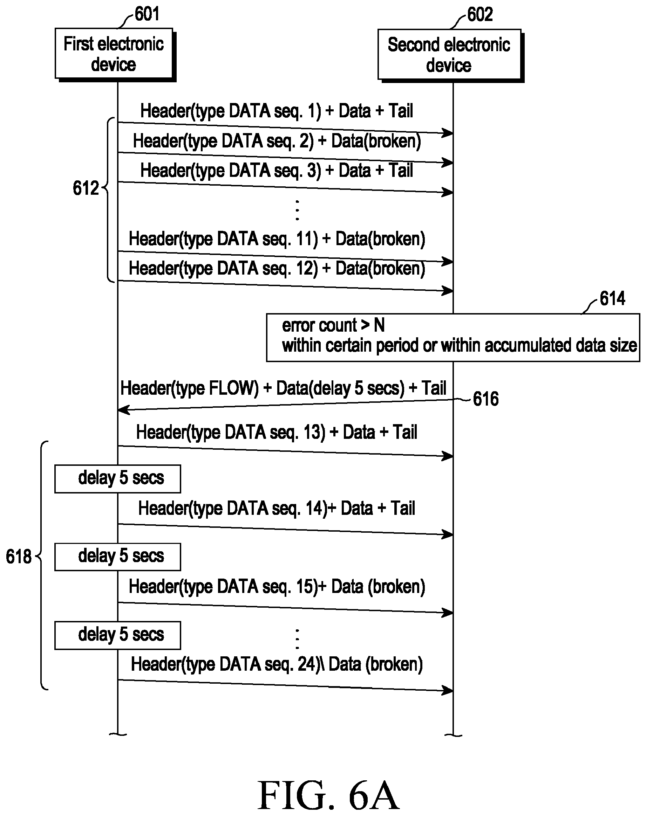

FIG. 6A to FIG. 6C illustrate a transmission delay operation based on a data packet error count in transmission and reception of a plurality of data packets between a first electronic device and a second electronic device according to an example.

FIG. 6A illustrates a case in which a first transmission delay time based on a first data packet error count corresponding to a first plurality of packets is applied when a plurality of data packets is transmitted and received between the first electronic device and the second electronic device according to an embodiment.

Referring to FIG. 6A, in operation 612, the first electronic device 601 (e.g., the electronic device 101 of FIG. 1 or the electronic device 201 of FIG. 2) may consecutively and sequentially transmit a plurality of data packets to the second electronic device 602 (e.g., the electronic device 202 of FIG. 2), based on a USB bulk transfer method. The number of transmitted data packets may not be pre-defined or limited to that shown in FIG. 6A.

In operation 614, the second electronic device 602 (or a processor thereof) may identify whether an error count (e.g., a first error frequency) of a first plurality of data packets (e.g., a first data packet (e.g., Header(type DATA seq. 1) + data + tail) to a 12th data packet (e.g., Header(type DATA seq. 12) + data (broken))) received within a specified time (e.g., a few seconds), within a specified data size, or within a specified number of packets is greater than a specified error count (N) (or an allowable error count) (e.g., 3) (error count > N within certain period or within accumulated data size). For example, the second electronic device 602 may identify a data packet having an error through a checksum or by checking a start/end flag with respect to each of the first plurality of data packets received within five seconds, and may identify whether the first error count corresponding to the first plurality of data packets exceeds 2, which is the specified error count.

In operation 616, when the first error frequency corresponding to the first plurality of data packets is greater than the specified error frequency, the second electronic device 602 may transmit a transmission delay time (e.g., a first transmission delay time (e.g., five seconds)) (or a flow control request signal including the transmission delay time) (e.g. Header(type FLOW) + data (delay 5 secs) + tail) based on the first error frequency to the first electronic device 601.

In operation 618, the first electronic device 601 may consecutively and sequentially transmit a second plurality of data packets (e.g., a 13th data packet (e.g., Header(type DATA seq. 13) + data + tail) to a 24th data packet (e.g., Header(type DATA seq. 24) + data (broken))) after the first plurality of data packets by separately delaying the transmission of each of the second plurality of data packets by the first transmission delay time (e.g., five seconds), based on reception of the first transmission delay time. For example, the delay between the transmission of the 13th data packet and the 14th data packet is the first transmission delay time, and the delay between the transmission of the 14th data packet and the 15th data packet is the first transmission delay time, and so forth. In other words the transmission of each of the data packets of the second plurality of data packets is separated by the first transmission delay time. Although 5 seconds has been given as a value for the first transmission delay time, this is merely an example and the first, second, third delay transmission times may take any suitable value.

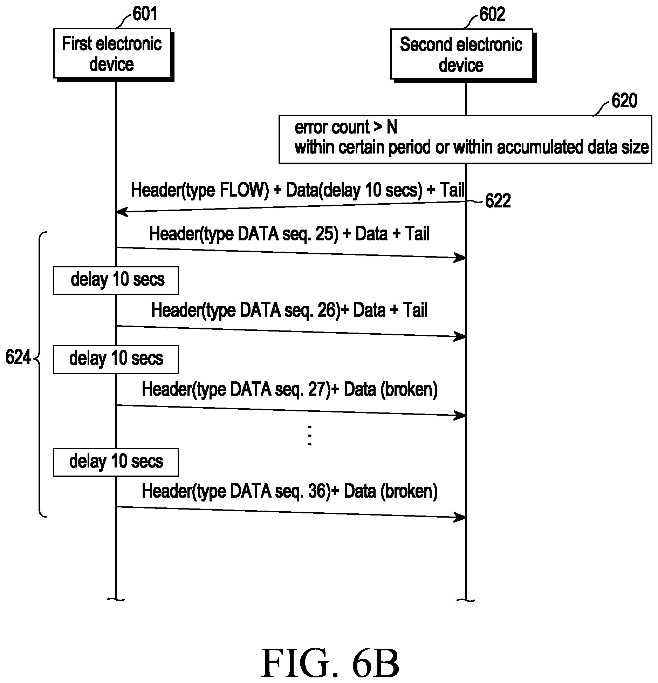

FIG. 6B illustrates a case in which a second transmission delay time based on a second data packet error frequency corresponding to a second plurality of packets is applied when the plurality of data packets is transmitted and received between the first electronic device and the second electronic deviceaccording to an embodiment.

Referring to FIG. 6B, in operation 620, the second electronic device 602 may identify whether an error frequency (e.g., a second error frequency) of the second plurality of data packets received within the specified time (e.g., a few seconds),within the specified data size, or within a specified number of data packets is greater than the specified error frequency (N) (error frequency > N within certain period or within accumulated data size). For example, the second electronic device 602 may identify a data packet having an error through a checksum or by checking a start/end flag with respect to each of the second plurality of data packets received within five seconds, and may identify whether the second error frequency corresponding to the second plurality of data packets exceeds 2, which is the specified error frequency.

In operation 622, when the second error frequency corresponding to the second plurality of data packets is greater than the specified error frequency, the second electronic device 602 may transmit a transmission delay time (e.g., a second transmission delay time (e.g., 10 seconds)) (or a flow control request signal including the transmission delay time) (e.g. Header(type FLOW) + data (delay 10 secs) + tail) based on the second error frequency to the first electronic device 601. In an example, when the second error frequency corresponding to the second plurality of data packets is not smaller than the specified error frequency but greater than the specified error frequency with the first error frequency being greater than the specified error frequency, the second electronic device 602 may transmit the second transmission delay time that is a longer time (e.g., 10 seconds) than the first transmission delay time (e.g., five seconds).

In operation 624, the first electronic device 601 may transmit a third plurality of data packets (e.g., a 25th data packet (Header(type DATA seq. 25) + data + tail) to a 36th data packet (Header(type DATA seq. 36) + data (broken))) after the second plurality of data packets by separately delaying each of the third plurality of data packets by the second transmission delay time (e.g., 10 seconds), based on reception of the second transmission delay time.

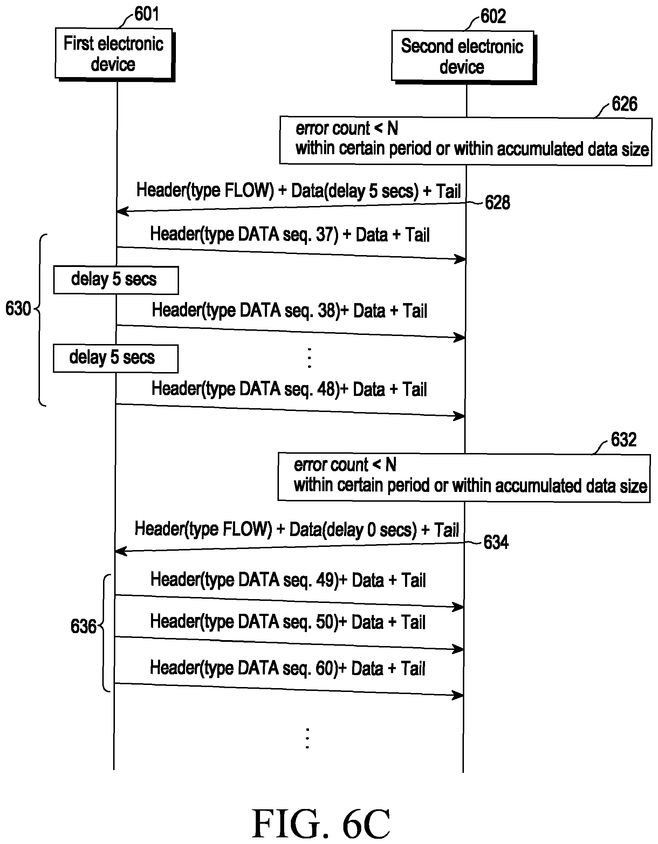

FIG. 6C illustrates a case in which a third transmission delay time based on a third data packet error frequency corresponding to a third plurality of packets is applied when the plurality of data packets is transmitted and received between the first electronic device and the second electronic device according to an embodiment.

Referring to FIG. 6C, in operation 626, the second electronic device 602 may identify whether an error frequency (e.g., a third error frequency) of the third plurality of data packets received within the specified time (e.g., a few seconds), within the specified data size, or within the specified number of data packets is smaller than the specified error frequency (N) (error frequency > N within certain period or within accumulated data size). For example, the second electronic device 602 may identify a data packet having an error through a checksum or by checking a start/end flag with respect to each of the third plurality of data packets received within five seconds, and may identify whether the third error frequency corresponding to the third plurality of data packets is less than 2, which is the specified error frequency.

In operation 628, when the third error frequency corresponding to the third plurality of data packets is smaller than the specified error frequency, the second electronic device 602 may transmit a transmission delay time (e.g., a third transmission delay time (e.g., 5 seconds)) (or a flow control request signal including the transmission delay time) (e.g. Header(type FLOW) + data (delay 5 secs) + tail) based on the third error frequency to the first electronic device 601. When the third error frequency corresponding to the third plurality of data packets is smaller than the specified error frequency, the third transmission delay time may be smaller than the second transmission delay time.

In operation 630, the first electronic device 601 may transmit a fourth plurality of data packets (e.g., a 37th data packet (e.g., Header(type DATA seq. 37) + data + tail) to a 48th data packet (e.g., Header(type DATA seq. 48) + data + tail)) after the third plurality of data packets by separately delaying each of the fourth plurality of data packets by the third transmission delay time (e.g., 5 seconds), based on reception of the third transmission delay time.

In operation 632, the second electronic device 602 may identify whether an error frequency (e.g., a fourth error frequency) of the fourth plurality of data packets received within the specified time (e.g., a few seconds) or within the specified data size is smaller than the specified error frequency (N) (error frequency > N within certain period or within accumulated data size). For example, the second electronic device 602 may identify a data packet having an error through a checksum or by checking a start/end flag with respect to each of the fourth plurality of data packets received within five seconds, and may identify whether the fourth error frequency corresponding to the fourth plurality of data packets is less than 2, which is the specified error frequency.

In operation 634, when the fourth error frequency corresponding to the fourth plurality of data packets is smaller than the specified error frequency, the second electronic device 602 may transmit a delay stop (or a flow control request signal including a transmission delay time of 0) to the first electronic device 601.

In operation 636, when receiving the delay stop (or the flow control request signal including the transmission delay time of 0), the first electronic device 601 may transmit subsequent data packets (e.g., a 49th data packet (e.g., Header(type DATA seq. 49) + data + tail) to a 60th data packet (e.g., Header(type DATA seq. 60) + data + tail)) to the second electronic device 602 without a delay.

Although a description of FIG. 6A to FIG. 6C shows an example in which the transmission delay times transmitted from the second electronic device 602 are transmitted as 5 seconds -> 10 seconds -> 5 seconds -> 0 seconds (four times or four rounds) based on the count of errors occurring in the received data packets, this is only for illustration, a longer or shorter delay time or a delay stop may be applied based on an increase or decrease in a count of errors occurring in transmission delay time data packets. For example, a transmission delay time transmitted from the second electronic device 602 may be transmitted as 5 seconds -> 10 seconds -> 15 seconds -> 10 seconds -> 5 seconds -> 0 seconds (five times or five rounds) based on a two-time increase and a two-time decrease in a count of errors occurring in received data packets, or may be transmitted as 5 seconds -> 0 seconds (two times or two rounds) based on a one-time increase and a one-time decrease in a count of errors occurring in received data packets. The transmission delay time transmitted from the second electronic device 602 may be designated a specified number of times (at least two times (or two rounds) to up to 10 times (or 10 rounds)). For example, when the count of errors occurring is the specified number of times or less, the second electronic device 602 may transmit a delay stop (or a flow control request signal including a transmission delay time of 0). For example, with the transmission delay time having increased from 5 seconds -> 10 seconds -> 15 seconds, based on the count of errors, when the count of errors is a specified error frequency, the second electronic device 602 may transmit a delay stop from 15 seconds -> 0 seconds (or a flow control request signal including a transmission delay time of 0) to the first electronic device 601.

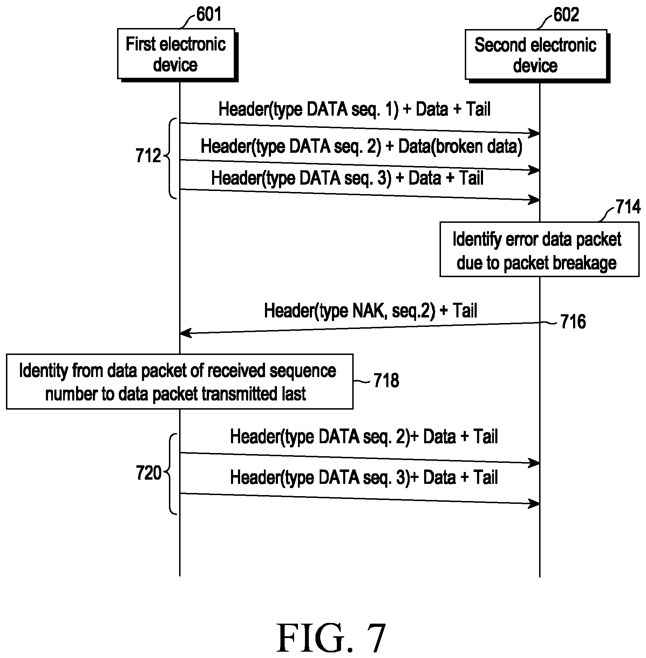

FIG. 7 illustrates an operation based on breakage of a data packet transmitted when a plurality of data packets of a USB bulk type is transmitted from a first electronic device to a second electronic device according to an embodiment.

Referring to FIG. 7, in operation 712, the first electronic device 601 (e.g., the electronic device 101 of FIG. 1 or the electronic device 201 of FIG. 2 or a processor thereof) may consecutively and sequentially transmit a plurality of data packets to the second electronic device 602 (e.g., the electronic device 202 of FIG. 2), based on a USB bulk transfer method. The number of transmitted data packets may not be pre-defined or limited to those shown in FIG. 7. The first electronic device 601 may store information about data packets transmitted within a specified time period (e.g., 10 seconds) or a specified number (e.g., 50) of data packets recently transmitted (in a queue) while transmitting the plurality of data packets.

In operation 714, the second electronic device 602 may identify packet breakage of each of the plurality of received data packets, and may identify an error data packet (broken data) due to packet breakage. The second electronic device 602 may identify the data packet having an error (broken data packet) through a checksum, by checking a start/end flag with respect to each of the plurality of data packets (e.g., a first data packet (e.g., Header(type DATA seq. 1) + data + tail) to a third data packet (e.g., Header(type DATA seq. 3) + data + tail)), or using any other suitable error detection technique.

In operation 716, the second electronic device 602 may transmit information about the error data packet due to the packet breakage to the first electronic device 601. The information about the error data packet may include a sequence number and a negative acknowledgement (NAK) (e.g., Header(type NAK, seq. 2) + tail) of the error data packet.

In operation 718, when receiving the information about the error data packet from the second electronic device 602 while transmitting the plurality of data packets, the first electronic device 601 may identify data packets from the data packet of the received sequence number to a data packet transmitted last, based on the stored information about the data packets transmitted within the specified time period or the specified number of data packets recently transmitted.

In operation 720, the first electronic device 601 may sequentially retransmit data packets from the data packet of the received sequence number to the data packet transmitted last (e.g., a second data packet (e.g., Header(type DATA seq. 2) + data + tail) and a third data packet (e.g., Header(type DATA seq. 3) + data + tail). When retransmission of the data packets is completed, the first electronic device 601 may continue to transmit the plurality of data packets after the retransmission. After transmitting the information about the error data packet, the second electronic device 602 may sequentially re-receive the data packets from the data packet of the sequence number to the data packet transmitted last from the first electronic device 601. After re-reception of the data packets is completed, the second electronic device 602 may continue to receive the plurality of data packets after the re-reception.

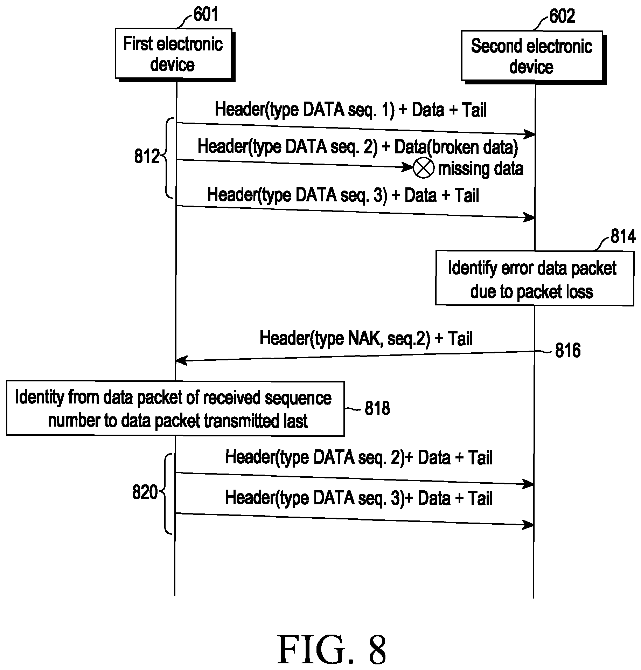

FIG. 8 illustrates an operation based on loss of a data packet transmitted when a plurality of data packets of a USB bulk type is transmitted from a first electronic device to a second electronic device according to an embodiment.

Referring to FIG. 8, in operation 812, the first electronic device 601 (e.g., the electronic device 101 of FIG. 1 or the electronic device 201 of FIG. 2 or a processor thereof) may consecutively and sequentially transmit a plurality of data packets to the second electronic device 602 (e.g., the electronic device 202 of FIG. 2), based on a USB bulk transfer method. The number of transmitted data packets may not be pre-defined or limited to those shown in FIG. 8. The first electronic device 601 according to an embodiment may store information about data packets transmitted within a specified time period (e.g., 10 seconds) or a specified number (e.g., 50) of data packets recently transmitted (in a queue) while transmitting the plurality of data packets.

In operation 814, the second electronic device 602 may identify packet loss of each of the plurality of received data packets, and may identify an error data packet (missing data) due to packet loss. The second electronic device 602 may identify the data packet having an error (missing data packet) through a checksum, by checking a start/end flag with respect to each of the plurality of data packets (e.g., a first data packet (e.g., Header(type DATA seq. 1) + data + tail) to a third data packet (e.g., Header(type DATA seq. 3) + data + tail)), or by using any other suitable error detection technique.

In operation 816, the second electronic device 602 may transmit information about the error data packet due to the packet loss to the first electronic device 601. The information about the error data packet according to an embodiment may include a sequence number and a negative acknowledgement (NAK) (e.g., Header(type NAK, seq. 2) + tail) of the error data packet.

In operation 818, when receiving the information about the error data packet from the second electronic device 602 while transmitting the plurality of data packets, the first electronic device 601 may identify data packets from the data packet of the received sequence number to a data packet transmitted last, based on the stored information about the data packets transmitted within the specified time period or the specified number of data packets recently transmitted.

In operation 820, the first electronic device 601 may sequentially retransmit data packets from the data packet of the received sequence number to the data packet transmitted last (e.g., a second data packet (e.g., Header(type DATA seq. 2) + data + tail) and a third data packet (e.g., Header(type DATA seq. 3) + data + tail). When retransmission of the data packets is completed, the first electronic device 601 may continue to transmit the plurality of data packets after the retransmission. After transmitting the information about the error data packet, the second electronic device 602 according to an embodiment may sequentially re-receive the data packets from the data packet of the sequence number to the data packet transmitted last from the first electronic device 201. After re-reception of the data packets is completed, the second electronic device 602 may continue to receive the plurality of data packets after the re-reception.

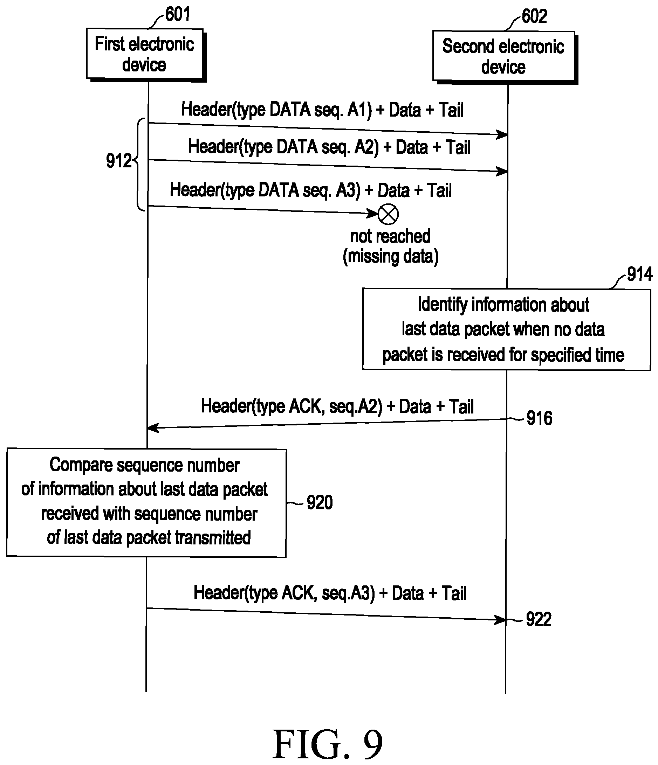

FIG. 9 illustrates an operation based on loss of a last data packet transmitted when a plurality of data packets of a USB bulk type is transmitted from a first electronic device to a second electronic device according to an embodiment.

Referring to FIG. 9, in operation 912, the first electronic device 601 (e.g., the electronic device 101 of FIG. 1 or the electronic device 201 of FIG. 2 or a processor thereof) according to an embodiment may consecutively and sequentially transmit a plurality of data packets to the second electronic device 602 (e.g., the electronic device 202 of FIG. 2), based on a USB bulk transfer method. The number of transmitted data packets may not be pre-defined or limited to those shown in FIG. 9.

In operation 914, when receiving no data packet for a specified time after receiving the plurality of data packets (e.g., a first data packet (e.g., Header(type DATA seq. 1) + data + tail) and a second data packet (e.g., Header(type DATA seq. 2) + data + tail)) from the first electronic device 201, the second electronic device 602 may identify information about a last data packet (e.g., the second data packet (e.g. Header(type DATA seq. 2) + data + tail)).

In operation 916, the second electronic device 602 may transmit the information (e.g., Header(type AKE seq. A2) + data + tail) about the last data packet to the first electronic device 601. The information about the last data packet may include a sequence number and an acknowledgment (ACK) of the data packet received last by the second electronic device 602. The information about the last data packet may be transmitted in a specified time after the second electronic device 602 receives the last data packet from the first electronic device 601. The specified time may be determined to be a value obtained by multiplying an average of time intervals of a specified number of data packets recently received by the second electronic device 602 by a predetermined multiple (e.g., an average (e.g., 10 ms) of time intervals of 100 data packets recently received * time constant (500) = 5 sec). However, the specified time is not limit to this.

In operation 920, the first electronic device 601 may compare the sequence number of the information about the last data packet received from the second electronic device 602 with a sequence number of a previously transmitted last data packet.

In operation 922, when the sequence number of the information about the last data packet is different from the sequence number of the last data packet transmitted by the first electronic device 601, the first electronic device 601 may retransmit data packets from the data packet of the sequence number of the information about the last data packet from the second electronic device 602 to the actual last data packet. When the sequence number of the information about the last data packet is the same as the sequence number of the last data packet transmitted by the first electronic device 601, the first electronic device 601 t may continue to subsequently transmit the plurality of data packets.

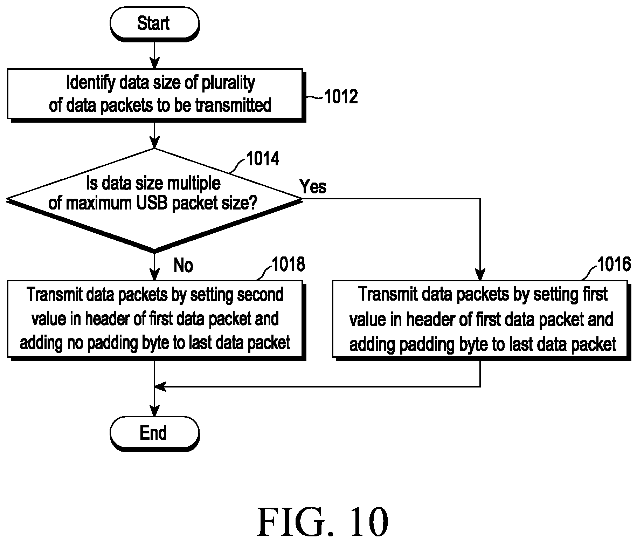

FIG. 10 illustrates an operation of adding and transmitting padding data, based on identification of the size of data to be transmitted by a first electronic device according to an embodiment.

Referring to FIG. 10, a processor (e.g., the processor 120 of FIG. 1) of the first electronic device (e.g., the electronic device 101 of FIG. 1 or the electronic device 202 of FIG. 2) may perform at least one of operations 1012 to 1018.

In operation 1012, the processor 220 may identify the data size of a plurality of data packets to be transmitted when transmitting the plurality of data packets to the second electronic device 202, based on a USB bulk transfer method. For example, the processor 220 may identify the size of data specified to be transmitted by an application when transmitting a plurality of data packets corresponding to the data specified to be transmitted by the application. The size of the data to be transmitted may refer to the total data to be transmitted by the application or the size of data to be transmitted in a particular plurality of data packets.

In operation 1014, the processor 220 may identify whether the data size of the plurality of data packets to be transmitted is a multiple of a maximum USB packet size.

In operation 1016, when the data size of the plurality of data packets to be transmitted is a multiple of the maximum USB packet size, the processor 220 may transmit the data packets after configuring a first value in a header of a first data packet among the plurality of data packets (e.g., configuring the first value (e.g., 1) as a hasPadding flag) and adding a predetermined padding byte of two bytes to a last data packet among the plurality of data packets.

In operation 1018, when the data size of the plurality of data packets to be transmitted is not a multiple of the maximum USB packet size, the processor 220 may transmit the data packets after configuring a second value in the header of the first data packet among the plurality of data packets (e.g., configuring the second value (e.g., 0) as the has Padding flag and adding no padding byte to the last data packet.

A first electronic device 202 may transmit a plurality of data packets by identifying the total data size of the plurality of data packets instead of identifying the data size of each of the plurality of data packets, thereby reducing resources and time required to identify a data size.

When receiving each of a plurality of data packets, based on a USB bulk transfer method, a second electronic device 202 may identify the value of a has Padding flag of a header of the received data packet and whether a padding byte exists. When identifying that the value of a hasPadding flag of a header of a first data packet among the plurality of data packets is configured to have a first value and then identifying that there is a padding byte in a subsequently received data packet, the second electronic device 202 may identify that the data packet having the padding byte is a last packet. When the value of the hasPadding flag of the header of the first received data packet among the plurality of data packets is configured to have a second value (e.g., 0), the second electronic device 202 may identify that there is no padding byte.

The approaches for bulk USB data transmission set out above may be also be combined with one another. For example, one or more of the approaches described with reference to FIGs. 7, 8 and 9 may be combined with that described with reference to FIGs. 6A-6C. For instance, the packet retransmission approaches of FIGs. 7, 8, or 9 may take place within/as part of the transmission of the first, second and/or third plurality of data packets, with the detected errors contributing towards the error rates upon which the transmission time delays are based.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"**coupled to**," "**connected with**,"* or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a non-transitory recording medium may store commands, the commands may be configured to cause an electronic device to perform at least one operation when executed by the electronic device, and the at least one operation may include receiving a first plurality of data packets from an external electronic device, identifying a first error frequency corresponding to the first plurality of data packets, identifying a first transmission delay time based on the first error frequency and transmitting the first transmission delay time to the external electronic device, and receiving, based on the transmitted first transmission delay, a second plurality of data packets transmitted after the first plurality of data packets from the external electronic device, where transmission of each of the data packets of the second plurality of data packets is delayed by the first transmission delay time with respect to its preceding data packet of the second plurality of data packets.

According to an embodiment, a non-transitory recording medium may store commands, the commands may be configured to cause an electronic device to perform at least one operation when executed by the electronic device, and the at least one operation may include transmitting a first plurality of data packets to an external electronic device, receiving a first transmission delay time based on a first error frequency corresponding to the first plurality of data packets from the external electronic device, and transmitting, based on the received first transmission delay time, a second plurality of data packets after the first plurality of data packets by delaying transmission of each of the second plurality of data packets by the first transmission delay time relative to the preceding data packet of the second plurality of data packets.

Embodiments of the disclosure disclosed in the specification and drawings are only intended to provide specific examples for easily describing technical content according to the embodiments of the disclosure and for assisting understanding of the embodiments of the disclosure, and are not intended to limit the scope of the embodiments of the disclosure.

## Claims

1. An electronic device (101, 202) comprising:
a USB connector (298);
a USB interface (297); and
a processor (120, 222),
wherein the processor is configured to
receive a first plurality of data packets from an external electronic device (201) via the USB connector and the USB interface,
identify a first error frequency corresponding to the first plurality of data packets,
identify a first transmission delay time based on the first error frequency,
transmit the first transmission delay time to the external electronic device via the USB connector and the USB interface, and
receive, based on transmission of the first transmission delay time, a second plurality of data packets transmitted after the first plurality of data packets from the external electronic device via the USB connector and the USB interface, wherein transmission of each data packet of the second plurality of data packets is separated by the first transmission delay time.

2. The electronic device of claim 1, wherein the first plurality of data packets are data packets received from the external electronic device within a specified time, within a specified number of data packets, or are within a specified data size.

3. The electronic device of claim 1 or 2, wherein the processor is further configured to identify whether or not an error occurs in each of the first plurality of data packets by performing a checksum on the each of the first plurality of data packets or checking start and end flags of the each of the plurality of first data packets.

4. The electronic device of any of claims 1 to 3, wherein the processor is further configured to
identify a second error frequency corresponding to the second plurality of data packets,
identify a second transmission delay time based on the second error frequency,
transmit the second transmission delay time to the external electronic device, and
receive, based on transmission of the second transmission delay time, a third plurality of data packets transmitted after the second plurality of data packets from the external electronic device,
wherein transmission of each data packet of the third plurality of data packets is separated by the second transmission delay time, and
wherein the second transmission delay time is specified to be longer than the first transmission delay time when the first error frequency is greater than the second error frequency, and the second transmission delay time is specified to be shorter than the first transmission delay time when the first error frequency is smaller than the second error frequency.

5. The electronic device of any of claims 1 to 4, wherein the processor is further configured to
identify an error data packet due to packet breakage or packet loss among a plurality of data packets received from the external electronic device,
transmit information about the error data packet to the external electronic device, and
sequentially re-receive, from the external electronic device, data packets from the error data packet to a last data packet received from the external electronic device.

6. The electronic device of any of claims 1 to 5, wherein the processor is further configured to
identify information a last data packet received from the external electronic device,
transmit a first sequence number of the information about the last data packet to the external electronic device, and
re-receive data packets from a data packet of the first sequence number to a data packet of a second sequence number when the first sequence number of the last data packet transmitted to the external electronic device is different from the second sequence number of the last data packet transmitted from the external electronic device.

7. The electronic device of any of claims 1 to 6, wherein the processor is further configured to identify whether or not a data packet is a last data packet among the plurality of data packets, based on whether or not the data packet, received from the external electronic device, comprises padding data,
wherein the data packet comprising the padding data is specified the last data packet when the data packet comprising the padding data is received after a first data packet which has a flag of a header with a specified value is received from the external electronic device.

8. A method in which an electronic device (101, 202) receives packet data via a USB connection from an external electronic device, the method comprising:
receiving (410) a first plurality of data packets from the external electronic device;
identifying (420) a first error frequency corresponding to the first plurality of data packets;
identifying (430) a first transmission delay time based on the first error frequency and transmitting the first transmission delay time to the external electronic device; and
receiving (440), based on transmission of the first transmission delay time, a second plurality of data packets transmitted after the first plurality of data packets from the external electronic device, wherein transmission of each data packet of the second plurality of data packets is separated by the first transmission delay time.

9. An electronic device (101, 201) comprising:
a USB connector (278);
a USB interface (277); and
a processor (120, 220),
wherein the processor is configured to
transmit a first plurality of data packets to an external electronic device via the USB connector and the USB interface,
receive a first transmission delay time based on a first error frequency corresponding to the first plurality of data packets from the external electronic device via the USB connector and the USB interface, and
transmit, based on reception of the first transmission delay time, a second plurality of data packets after the first plurality of data packets to the external electronic device via the USB connector and the USB interface by separating the transmission of each of the second plurality of data packets by the first transmission delay time.

10. The electronic device of claim 9, wherein the first plurality of data packets are data packets received by the external electronic device within a specified time, within a specified number of data packets, or are within a specified data size.

11. The electronic device of claim 9 or 10, wherein the processor is further configured to
receive a second transmission delay time based on a second error frequency corresponding to the second plurality of data packets from the external electronic device, and
transmit a third plurality of data packets after the second plurality of data packets to the external electronic device by separating the transmission of each of the third plurality of data packets by the second transmission delay time, wherein the second transmission delay time is specified to be longer than the first transmission delay time when the first error frequency is greater than the second error frequency, and the second transmission delay time is specified to be shorter than the first transmission delay time when the first error frequency is smaller than the second error frequency.

12. The electronic device of any of claims 9 to 11, wherein the processor is further configured to
receive information about an error data packet due to packet breakage or packet loss from the external electronic device while transmitting a plurality of data packets to the external electronic device, and
sequentially retransmit, to the external electronic device, data packets from the error data packet to a last data packet transmitted to the external electronic device, based on reception of the information about the error data packet.

13. The electronic device of one of claims 9 to 12, wherein the processor is configured to
receive information about a last data packet received by the external electronic device from the external electronic device, and
retransmit data packets from a data packet of a first sequence number to a data packet of a second sequence number when the first sequence number of the last data packet received by the external electronic device is different from the second sequence number of the last data packet transmitted to the external electronic device, based on the received information about the last data packet.

14. The electronic device of any of claims 9 to 13, wherein the processor is further configured to
identify a data size of the plurality of data packets to be transmitted to the external electronic device,
identify whether or not the data size of the plurality of data packets is a multiple of a maximum USB packet size, and
when the data size of the plurality of data packets is a multiple of the maximum USB packet size, transmit the plurality of data packets by configuring a first value as a value of a header of a first data packet among the plurality of data packets and adding padding data to a last data packet among the plurality of data packets, and
when the data size of the plurality of data packets is not a multiple of the maximum USB packet size, transmit the plurality of data packets by configuring a second value as the value of the header of the first data packet among the plurality of data packets and adding no padding data to the last data packet among the plurality of data packets.

15. A method in which an electronic device (101, 201) transmits packet data via a USB connection to an external electronic device, the method comprising:
transmitting a first plurality of data packets to the external electronic device;
receiving a first transmission delay time based on a first error frequency corresponding to the first plurality of data packets from the external electronic device; and
transmitting a second plurality of data packets after the first plurality of data packets to the external electronic device by separating the transmission of each of the second plurality of data packets by the first transmission delay time.

## Patentansprüche

1. Elektronische Vorrichtung (101, 202), umfassend:
einen USB-Anschluss (298);
eine USB-Schnittstelle (297); und
einen Prozessor (120, 222),
wobei der Prozessor dazu konfiguriert ist,
eine erste Vielzahl von Datenpaketen von einer externen elektronischen Vorrichtung (201) über den USB-Anschluss und die USB-Schnittstelle zu empfangen,
eine erste Fehlerhäufigkeit zu identifizieren, die der ersten Vielzahl von Datenpaketen entspricht,
eine erste Übertragungsverzögerungszeit basierend auf der ersten Fehlerhäufigkeit zu identifizieren,
die erste Übertragungsverzögerungszeit über den USB-Anschluss und die USB-Schnittstelle an die externe elektronische Vorrichtung zu senden, und
basierend auf der Übertragung der ersten Übertragungsverzögerungszeit, eine zweite Vielzahl von Datenpaketen zu empfangen, die nach der ersten Vielzahl von Datenpaketen von der externen elektronischen Vorrichtung über den USB-Anschluss und die USB-Schnittstelle gesendet werden, wobei die Übertragung jedes Datenpakets der zweiten Vielzahl von Datenpaketen durch die erste Übertragungsverzögerungszeit getrennt ist.

2. Elektronische Vorrichtung nach Anspruch 1, wobei die erste Vielzahl von Datenpaketen Datenpakete sind, die von der externen elektronischen Vorrichtung innerhalb einer spezifizierten Zeit, innerhalb einer spezifizierten Anzahl von Datenpaketen empfangen werden, oder innerhalb einer spezifizierten Datengröße sind.

3. Elektronische Vorrichtung nach Anspruch 1 oder 2, wobei der Prozessor ferner dazu konfiguriert ist, zu identifizieren, ob ein Fehler in jedem der ersten Vielzahl von Datenpaketen auftritt oder nicht, indem eine Prüfsumme an jedem der ersten Vielzahl von Datenpaketen durchgeführt wird oder Start- und End-Flags von jedem der Vielzahl von ersten Datenpaketen überprüft werden.

4. Elektronische Vorrichtung nach einem der Ansprüche 1 bis 3, wobei der Prozessor ferner dazu konfiguriert ist,
eine zweite Fehlerhäufigkeit zu identifizieren, die der zweiten Vielzahl von Datenpaketen entspricht,
eine zweite Übertragungsverzögerungszeit basierend auf der zweiten Fehlerhäufigkeit zu identifizieren,
die zweite Übertragungsverzögerungszeit an die externe elektronische Vorrichtung zu senden und
basierend auf der Übertragung der zweiten Übertragungsverzögerungszeit eine dritte Vielzahl von Datenpaketen zu empfangen, die nach der zweiten Vielzahl von Datenpaketen von der externen elektronischen Vorrichtung gesendet werden,
wobei die Übertragung jedes Datenpakets der dritten Vielzahl von Datenpaketen durch die zweite Übertragungsverzögerungszeit getrennt ist, und
wobei die zweite Übertragungsverzögerungszeit als länger als die erste Übertragungsverzögerungszeit spezifiziert ist, wenn die erste Fehlerhäufigkeit größer als die zweite Fehlerhäufigkeit ist, und die zweite Übertragungsverzögerungszeit als kürzer als die erste Übertragungsverzögerungszeit spezifiziert ist, wenn die erste Fehlerhäufigkeit kleiner als die zweite Fehlerhäufigkeit ist.

5. Elektronische Vorrichtung nach einem der Ansprüche 1 bis 4, wobei der Prozessor ferner dazu konfiguriert ist,
ein Fehlerdatenpaket aufgrund von Paketbruch oder Paketverlust unter einer Vielzahl von Datenpaketen zu identifizieren, die von der externen elektronischen Vorrichtung empfangen werden,
Informationen über das Fehlerdatenpaket an die externe elektronische Vorrichtung zu senden, und
von der externen elektronischen Vorrichtung Datenpakete von dem Fehlerdatenpaket zu einem letzten Datenpaket, das von der externen elektronischen Vorrichtung empfangen wird, sequentiell erneut zu empfangen.

6. Elektronische Vorrichtung nach einem der Ansprüche 1 bis 5, wobei der Prozessor ferner dazu konfiguriert ist,
Informationen eines letzten Datenpakets zu identifizieren, das von der externen elektronischen Vorrichtung empfangen wird, eine erste Sequenznummer der Informationen über das letzte Datenpaket an die externe elektronische Vorrichtung zu senden, und
Datenpakete von einem Datenpaket der ersten Sequenznummer zu einem Datenpaket einer zweiten Sequenznummer erneut zu empfangen, wenn sich die erste Sequenznummer des letzten Datenpakets, das an die externe elektronische Vorrichtung gesendet wird, von der zweiten Sequenznummer des letzten Datenpakets, das von der externen elektronischen Vorrichtung gesendet wird, unterscheidet.

7. Elektronische Vorrichtung nach einem der Ansprüche 1 bis 6, wobei der Prozessor ferner dazu konfiguriert ist, basierend darauf, ob das Datenpaket, das von der externen elektronischen Vorrichtung empfangen wird, Auffülldaten umfasst oder nicht, zu identifizieren, ob ein Datenpaket ein letztes Datenpaket unter der Vielzahl von Datenpaketen ist oder nicht,
wobei das Datenpaket, das die Auffülldaten umfasst, als das letzte Datenpaket spezifiziert wird, wenn das Datenpaket, das die Auffülldaten umfasst, empfangen wird, nachdem ein erstes Datenpaket, das ein Flag eines Headers mit einem spezifizierten Wert aufweist, von der externen elektronischen Vorrichtung empfangen wird.

8. Verfahren, bei dem eine elektronische Vorrichtung (101, 202) Paketdaten über eine USB-Verbindung von einer externen elektronischen Vorrichtung empfängt, wobei das Verfahren Folgendes umfasst:
Empfangen (410) einer ersten Vielzahl von Datenpaketen von der externen elektronischen Vorrichtung;
Identifizieren (420) einer ersten Fehlerhäufigkeit, die der ersten Vielzahl von Datenpaketen entspricht;
Identifizieren (430) einer ersten Übertragungsverzögerungszeit basierend auf der ersten Fehlerhäufigkeit und Senden der ersten Übertragungsverzögerungszeit an die externe elektronische Vorrichtung; und
Empfangen (440), basierend auf der Übertragung der ersten Übertragungsverzögerungszeit, einer zweiten Vielzahl von Datenpaketen, die nach der ersten Vielzahl von Datenpaketen von der externen elektronischen Vorrichtung gesendet werden, wobei die Übertragung jedes Datenpakets der zweiten Vielzahl von Datenpaketen durch die erste Übertragungsverzögerungszeit getrennt ist.

9. Elektronische Vorrichtung (101, 201), umfassend:
einen USB-Anschluss (278);
eine USB-Schnittstelle (277); und
einen Prozessor (120, 220),
wobei der Prozessor dazu konfiguriert ist,
eine erste Vielzahl von Datenpaketen über den USB-Anschluss und die USB-Schnittstelle an eine externe elektronische Vorrichtung zu senden,
eine erste Übertragungsverzögerungszeit basierend auf einer ersten Fehlerhäufigkeit, die der ersten Vielzahl von Datenpaketen entspricht, von der externen elektronischen Vorrichtung über den USB-Anschluss und die USB-Schnittstelle zu empfangen, und
basierend auf dem Empfang der ersten Übertragungsverzögerungszeit, eine zweite Vielzahl von Datenpaketen nach der ersten Vielzahl von Datenpaketen an die externe elektronische Vorrichtung über den USB-Anschluss und die USB-Schnittstelle zu senden, indem die Übertragung jedes der zweiten Vielzahl von Datenpaketen durch die erste Übertragungsverzögerungszeit getrennt wird.

10. Elektronische Vorrichtung nach Anspruch 9, wobei die erste Vielzahl von Datenpaketen Datenpakete sind, die durch die externe elektronische Vorrichtung innerhalb einer spezifizierten Zeit, innerhalb einer spezifizierten Anzahl von Datenpaketen empfangen werden, oder innerhalb einer spezifizierten Datengröße sind.

11. Elektronische Vorrichtung nach Anspruch 9 oder 10, wobei der Prozessor ferner dazu konfiguriert ist,
eine zweite Übertragungsverzögerungszeit basierend auf einer zweiten Fehlerhäufigkeit, die der zweiten Vielzahl von Datenpaketen entspricht, von der externen elektronischen Vorrichtung zu empfangen, und
eine dritte Vielzahl von Datenpaketen nach der zweiten Vielzahl von Datenpaketen an die externe elektronische Vorrichtung durch Trennen der Übertragung jedes der dritten Vielzahl von Datenpaketen durch die zweite Übertragungsverzögerungszeit zu senden, wobei die zweite Übertragungsverzögerungszeit als länger als die erste Übertragungsverzögerungszeit spezifiziert ist, wenn die erste Fehlerhäufigkeit größer als die zweite Fehlerhäufigkeit ist, und die zweite Übertragungsverzögerungszeit als kürzer als die erste Übertragungsverzögerungszeit spezifiziert ist, wenn die erste Fehlerhäufigkeit kleiner als die zweite Fehlerhäufigkeit ist.

12. Elektronische Vorrichtung nach einem der Ansprüche 9 bis 11, wobei der Prozessor ferner dazu konfiguriert ist,
Informationen über ein Fehlerdatenpaket aufgrund von Paketbruch oder Paketverlust von der externen elektronischen Vorrichtung zu empfangen, während eine Vielzahl von Datenpaketen an die externe elektronische Vorrichtung gesendet wird, und
Datenpakete von dem Fehlerdatenpaket zu einem letzten Datenpaket, das an die externe elektronische Vorrichtung gesendet wird, basierend auf dem Empfang der Informationen über das Fehlerdatenpaket sequentiell an die externe elektronische Vorrichtung erneut zu senden.

13. Elektronische Vorrichtung nach einem der Ansprüche 9 bis 12, wobei der Prozessor dazu konfiguriert ist, Informationen über ein letztes Datenpaket, das durch die externe elektronische Vorrichtung empfangen wird, von der externen elektronischen Vorrichtung zu empfangen, und
Datenpakete von einem Datenpaket einer ersten Sequenznummer zu einem Datenpaket einer zweiten Sequenznummer erneut zu senden, wenn sich die erste Sequenznummer des letzten Datenpakets, das durch die externe elektronische Vorrichtung empfangen wird, basierend auf den empfangenen Informationen über das letzte Datenpaket von der zweiten Sequenznummer des letzten Datenpakets, das an die externe elektronische Vorrichtung gesendet wird, unterscheidet.

14. Elektronische Vorrichtung nach einem der Ansprüche 9 bis 13, wobei der Prozessor ferner dazu konfiguriert ist,
eine Datengröße der Vielzahl von Datenpaketen zu identifizieren, die an die externe elektronische Vorrichtung zu senden sind,
zu identifizieren, ob die Datengröße der Vielzahl von Datenpaketen ein Vielfaches einer maximalen USB-Paketgröße ist oder nicht, und
wenn die Datengröße der Vielzahl von Datenpaketen ein Vielfaches der maximalen USB-Paketgröße ist, die Vielzahl von Datenpaketen durch Konfigurieren eines ersten Werts als ein Wert eines Headers eines ersten Datenpakets unter der Vielzahl von Datenpaketen und Hinzufügen von Auffülldaten zu einem letzten Datenpaket unter der Vielzahl von Datenpaketen zu senden, und
wenn die Datengröße der Vielzahl von Datenpaketen kein Vielfaches der maximalen USB-Paketgröße ist, die Vielzahl von Datenpaketen durch Konfigurieren eines zweiten Werts als den Wert des Headers des ersten Datenpakets unter der Vielzahl von Datenpaketen und Hinzufügen von keinen Auffülldaten zu dem letzten Datenpaket unter der Vielzahl von Datenpaketen zu senden.

15. Verfahren, bei dem eine elektronische Vorrichtung (101, 201) Paketdaten über eine USB-Verbindung an eine externe elektronische Vorrichtung sendet, wobei das Verfahren Folgendes umfasst:
Senden einer ersten Vielzahl von Datenpaketen an die externe elektronische Vorrichtung;
Empfangen einer ersten Übertragungsverzögerungszeit basierend auf einer ersten Fehlerhäufigkeit, die der ersten Vielzahl von Datenpaketen entspricht, von der externen elektronischen Vorrichtung; und
Senden einer zweiten Vielzahl von Datenpaketen nach der ersten Vielzahl von Datenpaketen an die externe elektronische Vorrichtung, indem die Übertragung jedes der zweiten Vielzahl von Datenpaketen durch die erste Übertragungsverzögerungszeit getrennt wird.

## Revendications

1. Dispositif électronique (101, 202) comprenant :
un connecteur USB (298) ;
une interface USB (297) ; et
un processeur (120, 222),
ledit processeur étant configuré pour
recevoir une première pluralité de paquets de données en provenance d'un dispositif électronique externe (201) par l'intermédiaire du connecteur USB et de l'interface USB,
identifier une première fréquence d'erreur correspondant à la première pluralité de paquets de données,
identifier un premier temps de retard de transmission sur la base de la première fréquence d'erreur,
transmettre le premier temps de retard de transmission au dispositif électronique externe par l'intermédiaire du connecteur USB et de l'interface USB, et
recevoir, sur la base de la transmission du premier temps de retard de transmission, une deuxième pluralité de paquets de données transmis après la première pluralité de paquets de données en provenance du dispositif électronique externe par l'intermédiaire du connecteur USB et de l'interface USB, ladite transmission de chaque paquet de données de la deuxième pluralité de paquets de données étant séparée par le premier temps de retard de transmission.

2. Dispositif électronique de la revendication 1, ladite première pluralité de paquets de données étant des paquets de données reçus en provenance du dispositif électronique externe dans les limites d'un temps spécifié, dans les limites d'un nombre spécifié de paquets de données, ou étant dans les limites d'une taille de données spécifiée.

3. Dispositif électronique de la revendication 1 ou 2, ledit processeur étant en outre configuré pour identifier si une erreur se produit ou non dans chacun de la première pluralité de paquets de données en effectuant une somme de contrôle sur chacun de la première pluralité de paquets de données ou en vérifiant les indicateurs de début et de fin de chacun de la pluralité de premiers paquets de données.

4. Dispositif électronique de l'une quelconque des revendications 1 à 3, ledit processeur étant en outre configuré pour
identifier une seconde fréquence d'erreur correspondant à la deuxième pluralité de paquets de données,
identifier un second temps de retard de transmission sur la base de la seconde fréquence d'erreur,
transmettre le second temps de retard de transmission au dispositif électronique externe, et recevoir, sur la base de la transmission du second temps de retard de transmission, une troisième pluralité de paquets de données transmis après la deuxième pluralité de paquets de données en provenance du dispositif électronique externe,
ladite transmission de chaque paquet de données de la troisième pluralité de paquets de données étant séparée par le second temps de retard de transmission, et
ledit second temps de retard de transmission étant spécifié pour être plus long que le premier temps de retard de transmission lorsque la première fréquence d'erreur est supérieure à la seconde fréquence d'erreur, et ledit second temps de retard de transmi ssion étant spécifié pour être plus court que le premier temps de retard de transmission lorsque la première fréquence d'erreur est inférieure à la seconde fréquence d'erreur.

5. Dispositif électronique de l'une quelconque des revendications 1 à 4, ledit processeur étant en outre configuré pour
identifier un paquet de données d'erreur en raison d'une rupture de paquet ou d'une perte de paquet parmi une pluralité de paquets de données reçus en provenance du dispositif électronique externe,
transmettre des informations concernant le paquet de données d'erreur au dispositif électronique externe, et
recevoir à nouveau séquentiellement, en provenance du dispositif électronique externe, des paquets de données du paquet de données d'erreur à un dernier paquet de données reçu en provenance du dispositif électronique externe.

6. Dispositif électronique de l'une quelconque des revendications 1 à 5, ledit processeur étant configuré pour
identifier des informations concernant un dernier paquet de données reçues en provenance du dispositif électronique externe,
transmettre un premier numéro de séquence des informations concernant le dernier paquet de données au dispositif électronique externe, et
recevoir à nouveau des paquets de données d'un paquet de données du premier numéro de séquence à un paquet de données d'un second numéro de séquence lorsque le premier numéro de séquence du dernier paquet de données transmis au dispositif électronique externe est différent du second numéro de séquence du dernier paquet de données transmis par le dispositif électronique externe.

7. Dispositif électronique de l'une quelconque des revendications 1 à 6, ledit processeur étant en outre configuré pour identifier si un paquet de données est ou non un dernier paquet de données parmi la pluralité de paquets de données, sur la base de la question de savoir si le paquet de données, reçu en provenance du dispositif électronique externe, comprend ou non des données de remplissage,
ledit paquet de données comprenant les données de remplissage étant spécifié comme le dernier paquet de données lorsque le paquet de données comprenant les données de remplissage est reçu après qu'un premier paquet de données qui possède un indicateur d'un en-tête avec une valeur spécifiée est reçu en provenance du dispositif électronique externe.

8. Procédé dans lequel un dispositif électronique (101, 202) reçoit des données par paquets par l'intermédiaire d'une connexion USB en provenance d'un dispositif électronique externe, le procédé comprenant :
la réception (410) d'une première pluralité de paquets de données en provenance du dispositif électronique externe ;
l'identification (420) d'une première fréquence d'erreur correspondant à la première pluralité de paquets de données ;
l'identification (430) d'un premier temps de retard de transmission sur la base de la première fréquence d'erreur et la transmission du premier temps de retard de transmission au dispositif électronique externe ; et
la réception (440), sur la base de la transmission du premier temps de retard de transmission, d'une deuxième pluralité de paquets de données transmis après la première pluralité de paquets de données en provenance du dispositif électronique externe, ladite transmission de chaque paquet de données de la deuxième pluralité de paquets de données étant séparée par le premier temps de retard de transmission.

9. Dispositif électronique (101, 201) comprenant :
un connecteur USB (278) ;
une interface USB (277) ; et
un processeur (120, 220),
ledit processeur étant configuré pour
transmettre une première pluralité de paquets de données à un dispositif électronique externe par l'intermédiaire du connecteur USB et de l'interface USB,
recevoir un premier temps de retard de transmission sur la base d'une première fréquence d'erreur correspondant à la première pluralité de paquets de données en provenance du dispositif électronique externe par l'intermédiaire du connecteur USB et de l'interface USB, et
transmettre, sur la base de la réception du premier temps de retard de transmission, une deuxième pluralité de paquets de données après la première pluralité de paquets de données au dispositif électronique externe par l'intermédiaire du connecteur USB et de l'interface USB en séparant la transmission de chacun de la deuxième pluralité de paquets de données par le premier temps de retard de transmission.

10. Dispositif électronique de la revendication 9, ladite première pluralité de paquets de données étant des paquets de données reçus par le dispositif électronique externe dans les limites d'un temps spécifié, dans les limites d'un nombre spécifié de paquets de données, ou étant dans les limites d'une taille de données spécifiée.

11. Dispositif électronique de la revendication 9 ou 10, ledit processeur étant en outre configuré pour
recevoir un second temps de retard de transmission sur la base d'une seconde fréquence d'erreur correspondant à la deuxième pluralité de paquets de données en provenance du dispositif électronique externe, et
transmettre une troisième pluralité de paquets de données après la deuxième pluralité de paquets de données au dispositif électronique externe en séparant la transmission de chacun de la troisième pluralité de paquets de données par le second temps de retard de transmission, ledit second temps de retard de transmission étant spécifié pour être plus long que le premier temps de retard de transmission lorsque la première fréquence d'erreur est supérieure à la seconde fréquence d'erreur, et ledit second temps de retard de transmission étant spécifié pour être plus court que le premier temps de retard de transmission lorsque la première fréquence d'erreur est inférieure à la seconde fréquence d'erreur.

12. Dispositif électronique de l'une quelconque des revendications 9 à 11, ledit processeur étant en outre configuré pour
recevoir des informations concernant un paquet de données d'erreur en raison d'une rupture de paquet ou d'une perte de paquet en provenance du dispositif électronique externe pendant la transmission d'une pluralité de paquets de données au dispositif électronique externe, et
retransmettre séquentiellement, au dispositif électronique externe, des paquets de données du paquet de données d'erreur à un dernier paquet de données transmis au dispositif électronique externe, sur la base de la réception des informations concernant le paquet de données d'erreur.

13. Dispositif électronique de l'une des revendications 9 à 12, ledit processeur étant configuré pour
recevoir des informations concernant un dernier paquet de données reçu par le dispositif électronique externe en provenance du dispositif électronique externe, et
retransmettre des paquets de données d'un paquet de données d'un premier numéro de séquence à un paquet de données d'un second numéro de séquence lorsque le premier numéro de séquence du dernier paquet de données reçu par le dispositif électronique externe est différent du second numéro de séquence du dernier paquet de données transmis au dispositif électronique externe, sur la base des informations reçues concernant le dernier paquet de données.

14. Dispositif électronique de l'une quelconque des revendications 9 à 13, ledit processeur étant en outre configuré pour
identifier une taille de données de la pluralité de paquets de données à transmettre au dispositif électronique externe,
identifier si la taille des données de la pluralité de paquets de données est ou non un multiple d'une taille maximale de paquet USB, et
lorsque la taille de données de la pluralité de paquets de données est un multiple de la taille maximale de paquet USB, transmettre la pluralité de paquets de données en configurant une première valeur en tant que valeur d'un en-tête d'un premier paquet de données parmi la pluralité de paquets de données et en ajoutant des données de remplissage à un dernier paquet de données parmi la pluralité de paquets de données, et
lorsque la taille de données de la pluralité de paquets de données n'est pas un multiple de la taille maximale de paquet USB, transmettre la pluralité de paquets de données en configurant une seconde valeur en tant que valeur de l'en-tête du premier paquet de données parmi la pluralité de paquets de données et en n'ajoutant aucune donnée de remplissage au dernier paquet de données parmi la pluralité de paquets de données.

15. Procédé dans lequel un dispositif électronique (101, 201) transmet des données par paquets par l'intermédiaire d'une connexion USB à un dispositif électronique externe, le procédé comprenant :
la transmission d'une première pluralité de paquets de données au dispositif électronique externe ;
la réception d'un premier temps de retard de transmission sur la base d'une première fréquence d'erreur correspondant à la première pluralité de paquets de données en provenance du dispositif électronique externe ; et
la transmission d'une deuxième pluralité de paquets de données après la première pluralité de paquets de données au dispositif électronique externe en séparant la transmission de chacun de la deuxième pluralité de paquets de données par le premier temps de retard de transmission.
